(19) Europäisches Patentamt
European Patent Office
Office européen des brevets

(11) **EP 3 988 868 A1**

(12) **EUROPEAN PATENT APPLICATION**
published in accordance with Art. 153(4) EPC

(43) Date of publication:
**27.04.2022 Bulletin 2022/17**

(21) Application number: **20827579.2**

(22) Date of filing: **19.06.2020**

(51) International Patent Classification (IPC):
***F25B 1/00*** (2006.01)    ***C09K 5/04*** (2006.01)

(52) Cooperative Patent Classification (CPC):
**C09K 5/04; F25B 1/00**

(86) International application number:
**PCT/JP2020/024180**

(87) International publication number:
**WO 2020/256122 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.06.2019 JP 2019114161**

(71) Applicant: **Daikin Industries, Ltd.
Osaka-shi, Osaka 530-8323 (JP)**

(72) Inventors:
• **ITANO, Mitsushi
Osaka-shi, Osaka 530-8323 (JP)**
• **OHKUBO, Shun
Osaka-shi, Osaka 530-8323 (JP)**
• **KARUBE, Daisuke
Osaka-shi, Osaka 530-8323 (JP)**

(74) Representative: **Hoffmann Eitle
Patent- und Rechtsanwälte PartmbB
Arabellastraße 30
81925 München (DE)**

(54) **REFRIGERANT-CONTAINING COMPOSITION, USE THEREOF, REFRIGERATOR USING SAME, AND OPERATION METHOD FOR SAID REFRIGERATOR**

(57) An object is to provide a novel low-GWP mixed refrigerant. A solution to the problem is to provide a composition containing a refrigerant that contains trans-1,2-difluoroethylene (HFO-1132(E)), difluoromethane (R32), and 1,3,3,3-tetrafluoropropene (R1234ze).

EP 3 988 868 A1

**Description**

Technical Field

The present disclosure relates to a composition containing a refrigerant, use of the composition, a refrigerating machine containing the composition, and a method for operating the refrigerating machine.

Background Art

R404A is currently used as a refrigerant for refrigeration apparatuses such as freezing and refrigerating equipment for commercial use. R404A is a three-component mixture refrigerant composed of pentafluoroethane (R125) (44%), 1,1,1-trifluoroethane (R143a) (52%), and 1,1,1,2-tetrafluoroethane (R134a) (4%). However, the global warming potential (GWP) of R404A is 3920. Due to growing concerns over global warming, there is demand for refrigerants with a lower GWP. For this reason, various low-GWP mixed refrigerants that can replace R404A have been proposed (PTL 1 to 5).

Citation List

Patent Literature

PTL 1: JP2012-526182A
PTL 2: JP2013-529703A
PTL 3: JP2015-511262A
PTL 4: JP2016-156001A
PTL 5: WO2015/141678A

Summary of Invention

Technical Problem

An object of the present disclosure is to provide a novel low-GWP mixed refrigerant.

Solution to Problem

Item 1.

A composition comprising a refrigerant, the refrigerant comprising trans-1,2-difluoroethylene (HFO-1132(E)), difluoromethane (R32), and 1,3,3,3-tetrafluoropropene (R1234ze).

Item 2.

The composition according to Item 1,
wherein

when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments IJ, JK, KF, FE, and EI, which connect the following 5 points, or fall on any of the line segments:

point I (70.3, 1.0, 28.7),
point J (57.1, 10.0, 32.9),
point K (45.4, 21.8, 32.8),
point F (2.8, 21.6, 75.6), and
point E (30.2, 1.0, 68.8),

line segments KF and EI are straight lines,

coordinates (x,y,z) of a point on line segment IJ are represented by (x, $0.00991x^2$-1.945x+88.734,-$0.00991x^2$+0.945x+11.266),

coordinates (x,y,z) of a point on line segment JK are represented by (x, $0.01605x^2$-2.6528x+109.17, -$0.01605x^2$+1.6528x-9.17), and

coordinates (x,y,z) of a point on line segment FE are represented by (x, $0.0017x^2$-0.8094x+23.852, -$0.0017x^2$-0.1906x+76.148).

Item 3.

The composition according to Item 1, wherein

when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments IJ, JK, KD, DC, and CI, which connect the following 5 points, or fall on any of line segments IJ, JK, KD, and DC:

point I (70.3, 1.0, 28.7),
point J (57.1, 10.0, 32.9),
point K (45.4, 21.8, 32.8),
point D (10.7, 21.6, 67.7), and
point C (38.6, 1.0, 60.4),

line segments KD and CI are straight lines,

coordinates (x,y,z) of a point on line segment IJ are represented by (x, $0.00991x^2$-1.945x+88.734,-$0.00991x^2$+0.945x+11.266),

coordinates (x,y,z) of a point on line segment JK are represented by (x, $0.01605x^2$-2.6528x+109.17, -$0.01605x^2$+1.6528x-9.17), and

coordinates (x,y,z) of a point on line segment DC are represented by (x, $0.00195x^2$-0.8346x+30.307, -$0.00195x^2$-0.1654x+69.693).

Item 4.

The composition according to Item 1, wherein

when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments LM, MN, NF, FE, and EL, which connect the following 5 points, or fall on any of line segments LM, MN, NF, and FE:

point L (34.8, 1.0, 64.2),
point M (20.4, 10.0, 69.6),
point N (17.1, 21.6, 61.3),
point F (2.8, 21.6, 75.6), and
point E (30.2, 1.0, 68.8),

line segments NF and EL are straight lines,

coordinates (x,y,z) of a point on line segment LM are represented by (x, $0.0399x^2$-2.8271x+51.071,-$0.0399x^2$+1.8271x+48.929),

coordinates (x,y,z) of a point on line segment MN are represented by (x, $0.9452x^2$-38.959x+411.42, -$0.9452x^2$+37.959x-311.42), and

coordinates (x,y,z) of a point on line segment FE are represented by (x, $0.0017x^2$-0.8094x+23.852, -$0.0017x^2$-0.1906x+76.148).

Item 5.

The composition according to Item 1,

wherein

when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments ON, ND, and DO, which connect the following 3 points, or fall on any of line segments ON, ND, and DO:

point O (18.1, 15.8, 66.1),
point N (17.1, 21.6, 61.3), and
point D (10.7, 21.6, 67.7),

line segment ND is a straight line,
coordinates (x,y,z) of a point on line segment ON are represented by (x, $0.9452x^2-38.959x+411.42$, $-0.9452x^2+37.959x-311.42$), and
coordinates (x,y,z) of a point on line segment DO are represented by (x, $0.00195x^2-0.8346x+30.307$, $-0.00195x^2-0.1654x+69.693$).

Item 6.

The composition according to any one of Items 1 to 5, wherein the refrigerant further comprises 2,3,3,3-tetrafluoropropene (R1234yf).

Item 7.

The composition according to Item 6,
wherein

when the mass% of HFO-1132(E) is x, the mass% of R32 is y, and the total mass% of R1234ze and R1234yf is z based on the sum of HFO-1132(E), R32, R1234ze, and R1234yf, and r=R1234yf/(R1234ze+R1234yf) in the refrigerant,
in a ternary composition diagram having HFO-1132(E) as a first vertex, R32 as a second vertex, and the sum of 1234ze and R1234yf as a third vertex,
when $0.103 \geq r>0$, coordinates (x,y,z) fall within a figure surrounded by straight lines $I_r I'_r$, $I'_r J_r$, $J_r J'_r$, $J'_r K_r$, $K_r F_r$, $F_r E'_r$, $E'_r E_r$, and $E_r I_r$, which connect the following 8 points, or fall on any of straight lines $I_r I'_r$, $I'_r J_r$, $J_r J'_r$, $J'_r K_r$, $K_r F_r$, $F_r E'_r$, and $E'_r E_r$:

point $I_r$ (70.3, 1.0, 28.7),
point $I'_r$ (63.8, 5.0, 31.2),
point $J_r$ (57.1, 10.0, 32.9),
point $J'_r$ (51.6, 15.0, 33.4),
point $K_r$ (45.4, 21.8, 32.8),
point $F_r$ (-17.476r+2.8, 21.6, 17.476r+75.6),
point $E'_r$ ($-0.3615r^2-17.002r+17.781$, 10.0, $0.3615r^2+17.002r+72.219$), and
point $E_r$ ($0.3938r^2-17.016r+30.22$, 1.0, $-0.3938r^2+17.016r+68.78$),

when $1.0>r>0.103$, coordinates (x,y,z) fall within a figure surrounded by straight lines $I_r I'_r$, $I'_r J_r$, $J_r J'_r$, $J'_r K_r$, $K_r B_r$, $B_r F_r$, $F_r E'_r$, $E'_r E_r$, and $E_r I_r$, which connect the following 9 points, or fall on any of straight lines $I_r I'_r$, $I'_r J_r$, $J_r J'_r$, $J'_r K_r$, $K_r B_r$, $B_r F_r$, $F_r E_r$', and $E'_r E_r$:

point $I_r$ (70.3, 1.0, 28.7),
point $I'_r$ (63.8, 5.0, 31.2),
point $J_r$ (57.1, 10.0, 32.9),
point $J'_r$ (51.6, 15.0, 33.4),
point $K_r$ (45.4, 21.8, 32.8),
point Br (1.0, $0.1885r^2+0.0694+21.543$, $-0.1885r^2-0.0694+77.457$)
point $F_r$ (1.0, $1.6787r^2-15.118r+23.139$, $-1.6787r^2+15.118r+75.861$),
point $E'_r$ ($-0.3615r^2-17.002r+17.781$, 10.0,

0.3615r$^2$+17.002r+72.219), and
point E$_r$ (0.3938r$^2$-17.016r+30.22, 1.0, -0.3938r$^2$+17.016r+68.78).

Item 8.

The composition according to Item 6,
wherein

when the mass% of HFO-1132(E) is x, the mass% of R32 is y, and the total mass% of R1234ze and R1234yf is z based on the sum of HFO-1132(E), R32, R1234ze, and R1234yf, and r=R1234yf/(R1234ze+R1234yf) in the refrigerant,
in a ternary composition diagram having HFO-1132(E) as a first vertex, R32 as a second vertex, and the sum of 1234ze and R1234yf as a third vertex,
when 0.103≥r>0, coordinates (x,y,z) fall within a figure surrounded by straight lines L$_r$l'$_r$, L'$_r$M$_r$, M$_r$M'$_r$, M'$_r$N$_r$, N$_r$F$_r$, F$_r$E'$_r$, E'$_r$E$_r$, and E$_r$l$_r$, which connect the following 8 points, or fall on any of straight lines L$_r$l'$_r$, L'$_r$M$_r$, M$_r$M'$_r$, M'$_r$N$_r$, N$_r$F$_r$, F$_r$E'$_r$, and E'$_r$E$_r$:

point L$_r$ (-5.5999r$^2$+20.0r+34.8, 1.0, 5.5999r$^2$-20.0r+64.2),
point L'$_r$ (-4.5644r$^2$+18.673r+25.41, 5.0, 4.5644r$^2$-18.673r+69.59),
point M$_r$ (-3.8003r$^2$+15.899r+20.401, 10.0, 3.8003r$^2$-15.899r+69.599),
point M'$_r$ (-3.0027r$^2$+13.693r+18.309, 15.0, 3.0027r$^2$-13.693r+66.691),
point N$_r$ (-1.7082r$^2$+11.022r+17.134, 0.3345r+21.594, 1.7082r$^2$-11.3565r+61.272),
point F$_r$ (-17.476r+2.8, 21.6, 17.476r+75.6),
point E'$_r$ (-0.3615r$^2$-17.002r+17.781, 10.0,
0.3615r$^2$+17.002r+72.219), and
point E$_r$ (0.3938r$^2$-17.016r+30.22, 1.0, -0.3938r$^2$+17.016r+68.78),

when 1.0>r>0.103, coordinates (x,y,z) fall within a figure surrounded by straight lines L$_r$L'$_r$, L'$_r$M$_r$, M$_r$M'$_r$, M'$_r$N$_r$, N$_r$B$_r$, B$_r$F$_r$, F$_r$E'$_r$, E'$_r$E$_r$, and E$_r$l$_r$, which connect the following 9 points, or fall on any of straight lines L$_r$L'$_r$, L'$_r$M$_r$, M$_r$M'$_r$, M'$_r$N$_r$, N$_r$B$_r$, B$_r$F$_r$, F$_r$E'$_r$, and E'$_r$E$_r$:

point L$_r$ (-5.5999r$^2$+20.0r+34.8, 1.0, 5.5999r$^2$-20.0r+64.2),
point L'$_r$ (-4.5644r$^2$+18.673r+25.41, 5.0, 4.5644r$^2$-18.673r+69.59),
point M$_r$ (-3.8003r$^2$+15.899r+20.401, 10.0, 3.8003r$^2$-15.899r+69.599),
point M'$_r$ (-3.0027r$^2$+13.693r+18.309, 15.0, 3.0027r$^2$-13.693r+66.691),
point N$_r$ (-1.7082r$^2$+11.022r+17.134, 0.3345r+21.594, 1.7082r$^2$-11.3565r+61.272),
point B$_r$ (1.0, 0.1885r$^2$+0.0694r+21.543, -0.1885r$^2$-0.0694r+77.457) point F$_r$ (1.0, 1.6787r$^2$-15.118r+23.139, -1.6787r$^2$+15.118r+75.861), point E'$_r$ (-0.3615r$^2$-17.002r+17.781, 10.0,
0.3615r$^2$+17.002r+72.219), and
point E$_r$ (0.3938r$^2$-17.016r+30.22, 1.0, -0.3938r$^2$+17.016r+68.78).

Item 9.

The composition according to any one of Items 1 to 8, which is for use as a working fluid for a refrigerating machine, the composition further comprising a refrigeration oil.

Item 10.

The composition according to any one of Items 1 to 9, which is for use as an alternative refrigerant for R404A.

Item 11.

Use of the composition of any one of Items 1 to 9 as an alternative refrigerant for R404A.

Item 12.

A refrigerating machine comprising the composition of any one of Items 1 to 9 as a working fluid.

Item 13.

A method for operating a refrigerating machine, comprising circulating the composition of any one of Items 1 to 9 as a working fluid in a refrigerating machine.

Advantageous Effects of Invention

The refrigerant according to the present disclosure has a low GWP.

Brief Description of Drawings

Fig. 1 is a schematic view of an apparatus used in a flammability test.
Fig. 2 is a diagram showing points A, C to F, and I to O, and line segments that connect these points in a ternary composition diagram in which the sum of HFO-1132(E), R32, and R1234ze is 99.5 mass%.

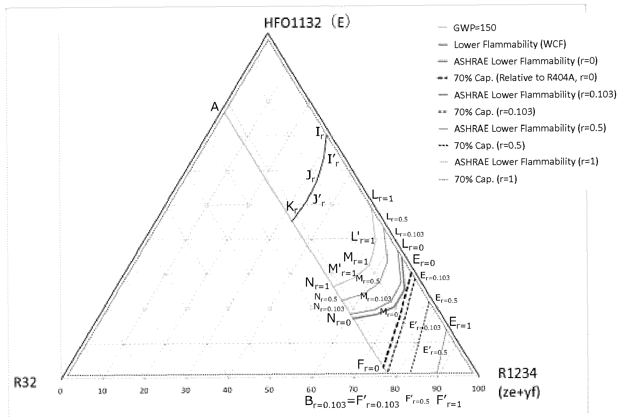

Fig. 3 is a diagram showing points A, $B_r$, $E_r$, $F_r$, $E_r'$, $F_r'$, $I_r$, $J_r$, $I_r'$, $J_r'$, $K_r$, $L_r$, $M_r$, $L_r'$, $M_r'$, and $N_r$, and line segments that connect these points in a ternary composition diagram having HFO-1132(E) as a first vertex, R32 as a second vertex, and the mass of 1234ze and R1234yf as a third vertex.

Description of Embodiments

The present inventors conducted intensive research to solve the above problem, and found that a mixed refrigerant containing trans-1,2-difluoroethylene (HFO-1132(E)), 1,3,3,3-tetrafluoropropene (R1234ze), trifluoroethylene (HFO-1123), and difluoromethane (R32) has the above properties.
The present disclosure was completed as a result of further research based on this finding. The present disclosure includes the following embodiments.

Definition of Terms

In the present disclosure, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), and ammonia (R717).
In the present disclosure, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present disclosure, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."
In the present disclosure, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.
The term "alternative" also includes a second type of "alternative," which means that equipment designed for operation using the second refrigerant is operated for the same use as the existing use achieved with the first refrigerant by using the second refrigerant. This type of alternative means that the same use is achieved with an alternative refrigerant.
In the present disclosure, the term "refrigerating machine" (refrigerator) refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present disclosure, "a refrigerant having WCF lower-flammability" means that a most flammable formulation (worst case of formulation for flammability) in accordance with U.S. ANSI/ASHRAE Standard 34-2013 has a burning velocity of 10 cm/s or less. In the present disclosure, "a refrigerant having an ASHRAE lower-flammability" means that the WCF burning velocity is 10 cm/s or less, and that the most flammable faction formulation (worst case of fractionation for flammability: WCFF) determined by conducting a leakage test in storage, shipping, and use in accordance with ANSI/ASHRAE Standard 34-2013 by using WCF has a burning velocity of 10 cm/s or less, and is classified under the category of "Class 2L" in the flammability classification of U.S. ANSI/ASHRAE Standard 34-2013.

1. Refrigerant

1.1 Refrigerant Component

The refrigerant according to the present disclosure contains trans-1,2-difluoroethylene (HFO-1132(E)), difluoromethane (R32), and 1,3,3,3-tetrafluoropropene (R1234ze).

The refrigerant according to the present disclosure may contain, as R1234ze, either R1234ze(E) or R1234ze(Z), or both, and preferably contains only R1234ze(E).

The refrigerant according to the present disclosure has a low GWP.

The refrigerant is preferably as follows: when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments IJ, JK, KF, FE, and EI, which connect the following 5 points, or fall on any of line segments IJ, JK, KF, and FE:

point I (70.3, 1.0, 28.7), point J (57.1, 10.0, 32.9),
point K (45.4, 21.8, 32.8),
point F (2.8, 21.6, 75.6), and
point E (30.2, 1.0, 68.8),

line segments KF and EI are straight lines,
coordinates (x,y,z) of a point on line segment IJ are represented by (x, $0.00991x^2$-1.945x+88.734, -$0.00991x^2$+0.945x+11.266),
coordinates (x,y,z) of a point on line segment JK are represented by (x, $0.01605x^2$-2.6528x+109.17, -$0.01605x^2$+1.6528x-9.17), and
coordinates (x,y,z) of a point on line segment FE are represented by (x, $0.0017x^2$-0.8094x+23.852, -$0.0017x^2$-0.1906x+76.148).

In this case, the refrigerant according to the present disclosure has a refrigerating capacity of 70% or more relative to R404A and has a GWP of 150 or less, and is classified under the category of WCF lower flammability.

The refrigerant is preferably as follows: when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments IJ, JK, KD, DC, and CI, which connect the following 5 points, or fall on any of the line segments:

point I (70.3, 1.0, 28.7),
point J (57.1, 10.0, 32.9),
point K (45.4, 21.8, 32.8),
point D (10.7, 21.6, 67.7), and
point C (38.6, 1.0, 60.4),

line segments KD and CI are straight lines,
coordinates (x,y,z) of a point on line segment IJ are represented by (x, $0.00991x^2$-1.945x+88.734, -$0.00991x^2$+0.945x+11.266),
coordinates (x,y,z) of a point on line segment JK are represented by (x, $0.01605x^2$-2.6528x+109.17, -$0.01605x^2$+1.6528x-9.17), and
coordinates (x,y,z) of a point on line segment DC are represented by (x, $0.00195x^2$-0.8346x+30.307, -$0.00195x^2$-0.1654x+69.693).

In this case, the refrigerant according to the present disclosure has a refrigerating capacity of 80% or more relative to R404A and has a GWP of 150 or less, and is classified under the category of WCF lower flammability.

The refrigerant is preferably as follows: when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments LM, MN, NF, FE, and EL, which connect the following 5 points, or fall on any of the line segments:

> point L (34.8, 1.0, 64.2),
> point M (20.4, 10.0, 69.6),
> point N (17.1, 21.6, 61.3),
> point F (2.8, 21.6, 75.6), and
> point E (30.2, 1.0, 68.8),
>
> line segments NF and EL are straight lines,
> coordinates (x,y,z) of a point on line segment LM are represented by $(x, 0.0399x^2-2.8271x+51.071, -0.0399x^2+1.8271x+48.929)$,
> coordinates (x,y,z) of a point on line segment MN are represented by $(x, 0.9452x^2-38.959x+411.42, -0.9452x^2+37.959x-311.42)$, and
> coordinates (x,y,z) of a point on line segment FE are represented by $(x, 0.0017x^2-0.8094x+23.852, -0.0017x^2-0.1906x+76.148)$.

In this case, the refrigerant according to the present disclosure has a refrigerating capacity of 70% or more relative to R404A and has a GWP of 150 or less, and is classified under the category of ASHRAE lower flammability.

The refrigerant is preferably as follows: when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments ON, ND, and DO, which connect the following 3 points, or fall on any of line segments ON, ND, and DO:

> point O (18.1, 15.8, 66.1),
> point N (17.1, 21.6, 61.3), and
> point D (10.7, 21.6, 67.7),
>
> line segment ND is a straight line,
> coordinates (x,y,z) of a point on line segment ON are represented by $(x, 0.9452x^2-38.959x+411.42, -0.9452x^2+37.959x-311.42)$, and
> coordinates (x,y,z) of a point on line segment DO are represented by $(x, 0.00195x^2-0.8346x+30.307, -0.00195x^2-0.1654x+69.693)$.

In this case, the refrigerant according to the present disclosure has a refrigerating capacity of 80% or more relative to R404A and has a GWP of 150 or less, and is classified under the category of ASHRAE lower flammability.

The refrigerant according to the present disclosure may further contain 2,3,3,3-tetrafluoropropene (R1234yf).

The refrigerant is preferably as follows: when the mass% of HFO-1132(E) is x, the mass% of R32 is y, and the total mass% of R1234ze and R1234yf is z based on the sum of HFO-1132(E), R32, R1234ze, and R1234yf, and r=R1234yf/(R1234ze+R1234yf) in the refrigerant,

> in a ternary composition diagram having HFO-1132(E) as a first vertex, R32 as a second vertex, and the sum of 1234ze and R1234yf as a third vertex,
> when $0.103 \geq r > 0$, coordinates (x,y,z) fall within a figure surrounded by straight lines $I_rI'_r$, $I'_rJ_r$, $J_rJ'_r$, $J'_rK_r$, $K_rF_r$, $F_rE'_r$, $E'_rE_r$, and $E_rI_r$, which connect the following 8 points, or fall on any of the straight lines:
>
> point $I_r$ (70.3, 1.0, 28.7),
> point $I'_r$ (63.8, 5.0, 31.2),
> point $J_r$ (57.1, 10.0, 32.9),
> point $J'_r$ (51.6, 15.0, 33.4),
> point $K_r$ (45.4, 21.8, 32.8),
> point $F_r$ (-17.476r+2.8, 21.6, 17.476r+75.6),
> point $E'_r$ (-0.3615r^2-17.002r+17.781, 10.0, 0.3615r^2+17.002r+72.219), and

point $E_r$ (0.3938r$^2$-17.016r+30.22, 1.0, -0.3938r$^2$+17.016r+68.78),

when 1.0>r>0.103, coordinates (x,y,z) fall within a figure surrounded by straight lines $I_rI'_r$, $I'_rJ_r$, $J_rJ'_r$, $J'_rK_r$, $K_rB_r$, $B_rF_r$, $F_rE'_r$, $E'_rE_r$, and $E_rI_r$, which connect the following 9 points, or fall on any of the straight lines:

point $I_r$ (70.3, 1.0, 28.7),
point $I'_r$ (63.8, 5.0, 31.2),
point $J_r$ (57.1, 10.0, 32.9),
point $J'_r$ (51.6, 15.0, 33.4),
point $K_r$ (45.4, 21.8, 32.8),
point Br (1.0, 0.1885r$^2$+0.0694+21.543, -0.1885r$^2$-0.0694+77.457)
point $F_r$ (1.0, 1.6787r$^2$-15.118r+23.139, -1.6787r$^2$+15.118r+75.861),
point $E'_r$ (-0.3615r$^2$-17.002r+17.781, 10.0,
0.3615r$^2$+17.002r+72.219), and
point $E_r$ (0.3938r$^2$-17.016r+30.22, 1.0, -0.3938r$^2$+17.016r+68.78).

In this case, the refrigerant according to the present disclosure has a refrigerating capacity of 70% or more relative to R404A, and is classified under the category of WCF lower flammability.

The refrigerant is preferably as follows: when the mass% of HFO-1132(E) is x, the mass% of R32 is y, and the total mass% of R1234ze and R1234yf is z based on the sum of HFO-1132(E), R32, R1234ze, and R1234yf, and r=R1234yf/(R1234ze+R1234yf) in the refrigerant,

in a ternary composition diagram having HFO-1132(E) as a first vertex, R32 as a second vertex, and the sum of 1234ze and R1234yf as a third vertex,
when 0.103≥r>0, coordinates (x,y,z) fall within a figure surrounded by straight lines $L_rI'_r$, $L'_rM_r$, $M_rM'_r$, $M'_rN_r$, $N_rF_r$, $F_rE'_r$, $E'_rE_r$, and $E_rI_r$, which connect the following 8 points, or fall on any of the straight lines:

point $L_r$ (-5.5999r$^2$+20.0r+34.87, 1.0, 5.5999r$^2$-20.0r+64.2),
point $L'_r$ (-4.5644r$^2$+18.673r+25.41, 5.0, 4.5644r$^2$-18.673r+69.59),
point $M_r$ (-3.8003r$^2$+15.899r+20.401, 10.0, 3.8003r$^2$-15.899r+69.599),
point $M'_r$ (-3.0027r$^2$+13.693r+18.309, 15.0, 3.0027r$^2$-13.693r+66.691),
point $N_r$ (-1.7082r$^2$+11.022r+17.134, 0.3345r+21.594, 1.7082r$^2$-11.3565r+61.272),
point $F_r$ (-17.476r+2.8, 21.6, 17.476r+75.6),
point $E'_r$ (-0.3615r$^2$-17.002r+17.781, 10.0,
0.3615r$^2$+17.002r+72.219), and
point $E_r$ (0.3938r$^2$-17.016r+30.22, 1.0, -0.3938r$^2$+17.016r+68.78),

when 1.0>r>0.103, coordinates (x,y,z) fall within a figure surrounded by straight lines $L_rL'_r$, $L'_rM_r$, $M_rM'_r$, $M'_rN_r$, $N_rB_r$, $B_rF_r$, $F_rE'_r$, $E'_rE_r$, and $E_rI_r$, which connect the following 9 points, or fall on any of the straight lines:

point $L_r$ (-5.5999r$^2$+20.0r+34.87, 1.0, 5.5999r$^2$-20.0r+64.2),
point $L'_r$ (-4.5644r$^2$+18.673r+25.41, 5.0, 4.5644r$^2$-18.673r+69.59),
point $M_r$ (-3.8003r$^2$+15.899r+20.401, 10.0, 3.8003r$^2$-15.899r+69.599),
point $M'_r$ (-3.0027r$^2$+13.693r+18.309, 15.0, 3.0027r$^2$-13.693r+66.691),
point $N_r$ (-1.7082r$^2$+11.022r+17.134, 0.3345r+21.594, 1.7082r$^2$-11.3565r+61.272),
point $B_r$ (1.0, 0.1885r$^2$+0.0694r+21.543, -0.1885r$^2$-0.0694r+77.457) point $F_r$ (1.0, 1.6787r$^2$-15.118r+23.139, -1.6787r$^2$+15.118r+75.861),
point $E'_r$ (-0.3615r$^2$-17.002r+17.781, 10.0,
0.3615r$^2$+17.002r+72.219), and
point $E_r$ (0.3938r$^2$-17.016r+30.22, 1.0, -0.3938r$^2$+17.016r+68.78).

In this case, the refrigerant according to the present disclosure has a refrigerating capacity of 70% or more relative to R404A, and is classified under the category of ASHRAE lower flammability.

The refrigerant according to the present disclosure may further contain other additional refrigerants in addition to HFO-1132(E), R32, R1234ze, and R1234yf, as long as the above properties and effects are not impaired. In this respect, the refrigerant according to the present disclosure contains HFO-1132(E), R32, and R1234ze in a total amount of preferably 99.5 mass% or more, more preferably 99.75 mass% or more, and still more preferably 99.9 mass% or more based on the entire refrigerant. In another embodiment, the refrigerant according to the present disclosure contains HFO-1132(E), R32, R1234ze, and R1234yf in a total amount of preferably 99.5 mass% or more, more preferably 99.75 mass% or more, and still more preferably 99.9 mass% or more, based on the entire refrigerant.

Such additional refrigerants are not limited, and can be selected from a wide range of refrigerants. The mixed refrigerant may contain a single additional refrigerant, or two or more additional refrigerants.

## 1.2 Use

The refrigerant according to the present disclosure can be preferably used as a working fluid in a refrigerating machine.

The composition according to the present disclosure is suitable for use as an alternative refrigerant for R404A.

## 2. Refrigerant Composition

The refrigerant composition according to the present disclosure contains at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further contains at least one other component in addition to the refrigerant according to the present disclosure. The refrigerant composition according to the present disclosure may contain at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially contain a refrigeration oil. Specifically, in the refrigerant composition according to the present disclosure, the content of the refrigeration oil based on the entire refrigerant composition is preferably 0 to 1 mass%, and more preferably 0 to 0.1 mass%.

## 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

## 2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may contain a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, hydrochlorofluorocarbon, chlorofluorocarbon, hydrochlorocarbon, fluorocarbon, or fluoroether.

The following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3Cl$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)

HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1,3, 3-pentafluoropropane, $CF_3CH_2CHF_2$)
HFC-236fa (1,1,1, 3, 3, 3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The refrigerant composition according to the present disclosure may contain a tracer in a total amount of about 10 parts per million by weight (ppm) to about 1000 ppm based on the entire refrigerant composition. The refrigerant composition according to the present disclosure may contain a tracer in a total amount of preferably about 30 ppm to about 500 ppm, and more preferably about 50 ppm to about 300 ppm, based on the entire refrigerant composition.

## 2.3. Ultraviolet Fluorescent Dye

The refrigerant composition according to the present disclosure may contain a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

## 2.4. Stabilizer

The refrigerant composition according to the present disclosure may contain a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitrobenzene and nitrostyrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant.

## 2.5. Polymerization Inhibitor

The refrigerant composition according to the present disclosure may contain a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant.

3. Refrigeration Oil-Containing Working Fluid

The refrigeration oil-containing working fluid according to the present disclosure contains at least the refrigerant or refrigerant composition according to the present disclosure and a refrigeration oil, and is used as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally contains 10 to 50 mass% of refrigeration oil.

3.1. Refrigeration Oil

The composition according to the present disclosure may contain a single refrigeration oil, or two or more refrigeration oils.
The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.
The base oil of the refrigeration oil is preferably, for example, at least one member selected from the group consisting of polyalkylene glycols (PAG), polyol esters (POE), and polyvinyl ethers (PVE).
The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.
A refrigeration oil with a kinematic viscosity of 5 to 400 cSt at 40°C is preferable from the standpoint of lubrication.
The refrigeration oil-containing working fluid according to the present disclosure may further optionally contain at least one additive. Examples of additives include the compatibilizing agents described below.

3.2. Compatibilizing Agent

The refrigeration oil-containing working fluid according to the present disclosure may contain a single compatibilizing agent, or two or more compatibilizing agents.
The compatibilizing agent is not limited, and can be suitably selected from commonly used compatibilizing agents.
Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

4. Method for Operating Refrigerating Machine

The method for operating a refrigerating machine according to the present disclosure is a method for operating a refrigerating machine using the refrigerant according to the present disclosure.
Specifically, the method for operating a refrigerating machine according to the present disclosure includes circulating the refrigerant according to the present disclosure in a refrigerating machine.
The embodiments are described above; however, it will be understood that various changes in forms and details can be made without departing from the spirit and scope of the claims.

Examples

The present disclosure is described in more detail below with reference to Examples. However, the present disclosure is not limited to the Examples.

Example A

Mixed refrigerants were prepared by mixing HFO-1132(E), R32, and R1234ze in mass% shown in Table 1 based on their sum.
The GWP of R404A (R125=44%/R143A=52%/R134A=4%) and the mixed refrigerants was evaluated based on the values stated in the Intergovernmental Panel on Climate Change (IPCC), fourth assessment report. The GWP of HFO-1132(E), which was not stated therein, was assumed to be 1 from HFO-1132a (GWP = 1 or less) and HFO-1123 (GWP = 0.3, described in PTL 1). The refrigerating capacity of R404A and the mixed refrigerants was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

The COP and refrigerating capacity of these mixed refrigerants relative to those of R404A were determined. The computational conditions were as follows.

Evaporating temperature: -40°C
Condensation temperature: 40°C
Superheating temperature: 20K
Subcooling temperature: 0K
Compressor efficiency: 70%

Tables 1 to 3 show these values together with the GWP of each mixed refrigerant. The COP and refrigerating capacity are percentages relative to R410A.

The coefficient of performance (COP) was determined by the following formula.

$$COP = (refrigerating\ capacity\ or\ heating\ capacity)/power\ consumption$$

Table 1

| Item | Unit | Com Ex1 | Com Ex2 | Com Ex3 | Example1 | Example2 | Example3 | Example4 | Example5 |
|---|---|---|---|---|---|---|---|---|---|
| | | | A | B | C | | D | E | |
| HFO-1132 (E) | Mass% | R404A | 76.9 | 1.0 | 38.6 | 25.9 | 10.7 | 30.2 | 17.8 |
| R32 | Mass% | | 22.1 | 21.5 | 1.0 | 10.0 | 21.6 | 1.0 | 10.0 |
| R1234ze | Mass% | | 1.0 | 77.5 | 60.4 | 64.1 | 67.7 | 68.8 | 72.2 |
| GWP | - | | 3922 | 150 | 150 | 11 | 72 | 150 | 11 | 72 |
| COP Ratio | % (Relative to R404A) | 100 | 105 | 113 | 109 | 110 | 112 | 110 | 111 |
| Refrigerating Capacity Ratio | % (Relative to R404A) | 100 | 170 | 68 | 80 | 80 | 80 | 70 | 70 |
| Condensation Glide | °C | 0.3 | 0.4 | 11.1 | 9.3 | 10.8 | 11.3 | 10.0 | 11.4 |

| Item | Unit | Example6 | Example7 | Example8 | Example9 | Example10 | Example11 | Example12 | Example13 |
|---|---|---|---|---|---|---|---|---|---|
| | | F | I | | J | | K | L | |
| HFO-1132 (E) | Mass% | 2.8 | 70.3 | 63.8 | 57.1 | 51.6 | 45.4 | 34.8 | 25.4 |
| R32 | Mass% | 21.6 | 1.0 | 5.0 | 10.0 | 15.0 | 21.8 | 1.0 | 5.0 |
| R1234ze | Mass% | 75.6 | 28.7 | 31.2 | 32.9 | 33.4 | 32.8 | 64.2 | 69.6 |
| GWP | - | 150 | 9 | 36 | 70 | 104 | 150 | 11 | 38 |
| COP Ratio | % (Relative to R404A) | 113 | 106 | 107 | 107 | 107 | 107 | 110 | 110 |
| Refrigerating Capacity Ratio | % (Relative to R404A) | 70 | 119 | 118 | 119 | 121 | 125 | 76 | 71 |
| Condensation Glide | °C | 11.2 | 4.3 | 5.1 | 5.7 | 6.0 | 6.0 | 9.7 | 10.7 |

| Item | Unit | Example14 | Example15 | Example16 | Example17 |
|---|---|---|---|---|---|
| | | M | | N | O |
| HFO-1132 (E) | Mass% | 20.4 | 18.3 | 17.1 | 18.1 |
| R32 | Mass% | 10.0 | 15.0 | 21.6 | 15.8 |
| R1234ze | Mass% | 69.6 | 66.7 | 61.3 | 66.1 |
| GWP | - | 72 | 105 | 150 | 111 |
| COP Ratio | % (Relative to R404A) | 111 | 111 | 111 | 111 |
| Refrigerating Capacity Ratio | % (Relative to R404A) | 73 | 79 | 88 | 80 |
| Condensation Glide | °C | 11.3 | 11.3 | 10.8 | 11.3 |

A leak was simulated with the formulation of each mixture as WCF, under the conditions of equipment, storage, shipping, leak, and recharge based on ASHRAE Standard 34-2013, by using the NIST Standard Reference Database Refleak Version 4.0, and the most flammable fraction was determined to be WCFF.

For the flammability, the burning velocity was measured according to ANSI/ASHRAE Standard 34-2013. Compositions having a burning velocity of 10 cm/s or less in both WCF and WCFF were determined to be "Class 2L (lower flammability)."

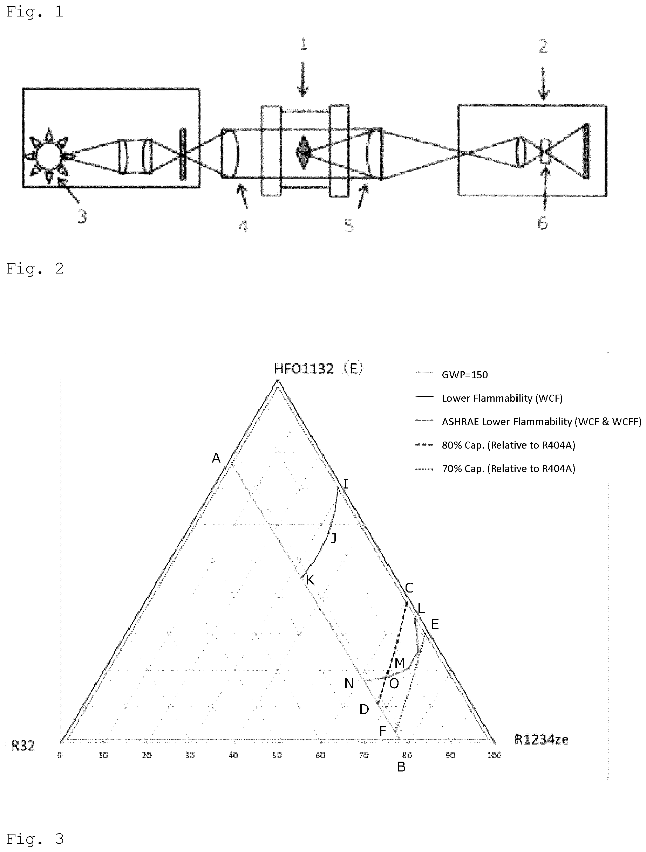

A burning velocity test was performed using the apparatus shown in Fig. 1 in the following manner. First, the mixed refrigerants were purified to 99.5% or more, and were deaerated by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light-transmissive acrylic windows was used as the sample cell, and a xenon lamp was used as the light source. The propagation of flame was filmed with a schlieren system using a collimating lens and a high-speed digital video camera (frame rate: 600 fps), and recorded as video data on a PC. From the video image, flame propagation rate Sb (cm/sec) was measured. The burning velocity (Su) is expressed by the volume of unburned gas consumed by the flame surface of a unit area per unit time and was calculated by using the following formula.

Su=Sb*pu/pb
pu: adiabatic flame temperature (unburned)
pb: adiabatic flame temperature (burned)
pu was calculated from a measurement temperature, and pb was calculated from the combustion and isobaric specific heat of combustion gas.

Table 2 shows the results.

Table 2

| | Item | Unit | I | I' | J | J' | F |
|---|---|---|---|---|---|---|---|
| WCF | HFO-1132 (E) | Mass% | 70.3 | 63.8 | 57.1 | 51.6 | 45.4 |
| | R32 | Mass% | 1.0 | 5.0 | 10.0 | 15.0 | 21.8 |
| | R1234ze | Mass% | 28.7 | 31.2 | 32.9 | 33.4 | 32.8 |
| Burning Velocity (WCF) | | cm/s | 10 | 10 | 10 | 10 | 10 |

| | Item | Unit | L | L' | M | M' | N |
|---|---|---|---|---|---|---|---|
| WCF | HFO-1132 (E) | Mass% | 34.8 | 25.4 | 20.4 | 18.3 | 17.1 |
| | R32 | Mass% | 1.0 | 5.0 | 10.0 | 15.0 | 21.6 |
| | R1234ze | Mass% | 64.2 | 69.6 | 69.6 | 66.7 | 61.3 |
| Leak Conditions Forming WCFF | | | Storage and Shipping - 34.5°C,0% When | Storage and Shipping - 33.9°C,0% When | Storage and Shipping - 34.7°C,0% When | Storage and Shipping - 35.9°C,0% When | Storage and Shipping - 37.4°C,0% When |
| WCFF | HFO-1132 (E) | Mass% | 67.9 | 54.5 | 44.2 | 38.2 | 33.5 |
| | R32 | Mass% | 2.4 | 12.3 | 23.4 | 32.2 | 41.0 |
| | R1234ze | Mass% | 29.7 | 33.2 | 32.4 | 29.6 | 25.5 |
| Burning Velocity (WCF) | | cm/s | 5 or less | 5 or less | 5 or less | 5 or less | 5 or less |
| Burning Velocity (WCFF) | | cm/s | 10 | 10 | 10 | 10 | 10 |

From these results, it is understood that a mixed refrigerant has a refrigerating capacity of 70% or more relative to R404A and has a GWP of 150 or less, and is classified under the category of WCF lower flammability when the mixed refrigerant is represented as follows: when the mass% of HFO-1132(E), R32, and R1234ze based on their sum in the mixed refrigerant is respectively x, y, and z, coordinates (x,y,z) in a ternary composition diagram in which the sum of HFO-1132(E), R32, and R1234ze is 100 mass% fall within a figure surrounded by line segments IJ, JK, KF, FE, and EI, which connect the following 5 points, or fall on any of the line segments:

point I (70.3, 1.0, 28.7),
point J (57.1, 10.0, 32.9),
point K (45.4, 21.8, 32.8),
point F (2.8, 21.6, 75.6), and
point E (30.2, 1.0, 68.8),

line segments KF and EI are straight lines,
coordinates (x,y,z) of a point on line segment IJ are represented by (x, $0.00991x^2$-1.945x+88.734,-$0.00991x^2$+0.945x+11.266),
coordinates (x,y,z) of a point on line segment JK are represented by (x, $0.01605x^2$-2.6528x+109.17, -$0.01605x^2$+1.6528x-9.17), and
coordinates (x,y,z) of a point on line segment FE are represented by (x, $0.0017x^2$-0.8094x+23.852, -$0.0017x^2$-0.1906x+76.148).

It is also understood that a mixed refrigerant has a refrigerating capacity of 80% or more relative to R404A and has a GWP of 150 or less, and is classified under the category of WCF lower flammability when the mixed refrigerant is represented as follows: when the mass% of HFO-1132(E), R32, and R1234ze based on their sum in the mixed refrigerant is respectively x, y, and z, coordinates (x,y,z) in a ternary composition diagram in which the sum of HFO-1132(E), R32, and R1234ze is 100 mass% fall within a figure surrounded by line segments IJ, JK, KD, DC, and CI, which connect the following 5 points, or fall on any of the line segments:

point I (70.3, 1.0, 28.7),
point J (57.1, 10.0, 32.9),
point K (45.4, 21.8, 32.8),
point D (10.7, 21.6, 67.7), and
point C (38.6, 1.0, 60.4),

line segments KD and CI are straight lines, coordinates (x,y,z) of a point on line segment IJ are represented by (x, $0.00991x^2$-1.945x+88.734,-$0.00991x^2$+0.945x+11.266),
coordinates (x,y,z) of a point on line segment JK are represented by (x, $0.01605x^2$-2.6528x+109.17, -$0.01605x^2$+1.6528x-9.17), and
coordinates (x,y,z) of a point on line segment DC are represented by (x, $0.00195x^2$-0.8346x+30.307, -$0.00195x^2$-0.1654x+69.693).

It is also understood that a mixed refrigerant has a refrigerating capacity of 70% or more relative to R404A and has a GWP of 150 or less, and is classified under the category of ASHRAE lower flammability when the mixed refrigerant is represented as follows: when the mass% of HFO-1132(E), R32, and R1234ze based on their sum in the mixed refrigerant is respectively x, y, and z, coordinates (x,y,z) in a ternary composition diagram in which the sum of HFO-1132(E), R32, and R1234ze is 100 mass% fall within a figure surrounded by line segments LM, MN, NF, FE, and EL, which connect the following 5 points, or fall on any of the line segments:

point L (34.8, 1.0, 64.2),
point M (20.4, 10.0, 69.6),
point N (17.1, 21.6, 61.3),
point F (2.8, 21.6, 75.6), and
point E (30.2, 1.0, 68.8),

line segments NF and EL are straight lines,
coordinates (x,y,z) of a point on line segment LM are represented by (x, $0.0399x^2$-2.8271x+51.071,-$0.0399x^2$+1.8271x+48.929),
coordinates (x,y,z) of a point on line segment MN are represented by (x, $0.9452x^2$-38.959x+411.42, -$0.9452x^2$+37.959x-311.42), and
coordinates (x,y,z) of a point on line segment FE are represented by (x, $0.0017x^2$-0.8094x+23.852, -$0.0017x^2$-0.1906x+76.148).

It is also understood that a mixed refrigerant has a refrigerating capacity of 80% or more relative to R404A and has a GWP of 150 or less, and is classified under the category of ASHRAE lower flammability when the mixed refrigerant is represented as follows: when the mass% of HFO-1132(E), R32, and R1234ze based on their sum in the mixed refrigerant is respectively x, y, and z, coordinates (x,y,z) in a ternary composition diagram in which the sum of HFO-1132(E), R32, and R1234ze is 100 mass% fall within a figure surrounded by line segments ON, ND, and DO, which connect the following 3 points, or fall on any of line segments ON, ND, and DO:

point O (18.1, 15.8, 66.1),
point N (17.1, 21.6, 61.3), and
point D (10.7, 21.6, 67.7),

line segment ND is a straight line,
coordinates (x,y,z) of a point on line segment ON are represented by (x, $0.9452x^2-38.959x+411.42$, $-0.9452x^2+37.959x-311.42$), and
coordinates (x,y,z) of a point on line segment DO are represented by (x, $0.00195x^2-0.8346x+30.307$, $-0.00195x^2-0.1654x+69.693$).

The approximate expressions that represent line segments connecting the points were each determined in the following manner.

Table 3

| Item | Unit | Example1 | Example2 | Example3 | Example4 | Example5 | Example6 |
|---|---|---|---|---|---|---|---|
| | | C | | D | E | | F |
| HFO-1132 (E) | Mass% | 38.6 | 25.9 | 10.7 | 30.2 | 17.8 | 2.8 |
| R32 | Mass% | 1.0 | 10.0 | 21.6 | 1.0 | 10.0 | 21.6 |
| R1234ze | Mass% | 60.4 | 64.1 | 67.7 | 68.8 | 72.2 | 75.6 |
| x=HFO-1132 (E) | | x | | | x | | |
| Approximate Expression of R32 | | $0.00195x^2-0.8346x+30.307$ | | | $0.0017x^2-0.8094x+23.852$ | | |
| Approximate Expression of R1234ze | | $-0.00195x^2-0.1654x+69.693$ | | | $-0.0017x^2-0.1906x+76.148$ | | |

| Item | Unit | Example7 | Example8 | Example9 | Example9 | Example10 | Example11 |
|---|---|---|---|---|---|---|---|
| | | I | | J | J | | K |
| HFO-1132 (E) | Mass% | 70.3 | 63.8 | 57.1 | 57.1 | 51.6 | 45.4 |
| R32 | Mass% | 1.0 | 5.0 | 10.0 | 10.0 | 15.0 | 21.8 |
| R1234ze | Mass% | 28.7 | 31.2 | 32.9 | 32.9 | 33.4 | 32.8 |
| x=HFO-1132 (E) | | x | | | x | | |
| Approximate Expression of R32 | | $0.00991x^2-1.945x+88.734$ | | | $0.01605x^2-2.6528x+109.17$ | | |
| Approximate Expression of R1234ze | | $-0.00991x^2+0.945x+11.266$ | | | $-0.01605x^2+1.6528x-9.17$ | | |

| Item | Unit | Example12 | Example13 | Example14 | Example14 | Example15 | Example16 |
|---|---|---|---|---|---|---|---|
| | | L | | M | M | | N |
| HFO-1132 (E) | Mass% | 34.8 | 25.4 | 20.4 | 20.4 | 18.3 | 17.1 |
| R32 | Mass% | 1.0 | 5.0 | 10.0 | 10.0 | 15.0 | 21.6 |
| R1234ze | Mass% | 64.2 | 69.6 | 69.6 | 69.6 | 66.7 | 61.3 |
| x=HFO-1132 (E) | | x | | | x | | |
| Approximate Expression of R32 | | $0.0399x^2-2.8271x+51.071$ | | | $0.9452x^2-38.959x+411.42$ | | |
| Approximate Expression of R1234ze | | $-0.0399x^2+1.8271x+48.929$ | | | $-0.9452x^2+37.959x-311.42$ | | |

Example B

Mixed refrigerants were prepared such that the mass% of HFO-1132(E), the mass% of R32, and the total mass% of R1234ze and R1234yf were as shown in Tables 4 and 5 based on the sum of HFO-1132(E), R32, R1234ze, and R1234yf, and evaluated in the same manner as in Example A. Tables 4 and 5 show the results. The alphabetical letter "r" represents R1234yf/(R1234ze+R1234yf).

Table 4

| Item | Unit | Com Ex4 | Com Ex5 | Example18 | Example19 | Example20 | Example21 | Example22 | Example23 |
|---|---|---|---|---|---|---|---|---|---|
| | | $A_{r=0.103}$ | $B_{r=0.103}$ | $E_{r=0.103}$ | $E'_{r=0.103}$ | $F_{r=0.103}$ | $I_{r=0.103}$ | $I'_{r=0.103}$ | $J_{r=0.103}$ |
| HFO-1132 (E) | Mass% | 76.9 | 1.0 | 28.5 | 16.0 | 1.0 | 70.3 | 63.8 | 57.1 |
| R32 | Mass% | 22.1 | 21.6 | 1.0 | 10.0 | 21.6 | 1.0 | 5.0 | 10.0 |
| R1234(ze+yf) | Mass% | 1.0 | 77.4 | 70.5 | 74.0 | 77.4 | 28.7 | 31.2 | 32.9 |
| GWP | - | 150 | 150 | 11 | 72 | 150 | 9 | 36 | 70 |
| COP Ratio | % (Relative to R404A) | 105 | 112 | 110 | 111 | 112 | 106 | 106 | 107 |
| Refrigerating Capacity Ratio | % (Relative to R404A) | 170 | 70 | 70 | 70 | 70 | 120 | 119 | 120 |
| Condensation Glide | °C | 0.4 | 10.7 | 9.6 | 10.9 | 10.7 | 4.1 | 4.8 | 5.4 |

| Item | Unit | Example24 | Example25 | Example26 | Example27 | Example28 | Example29 | Example30 |
|---|---|---|---|---|---|---|---|---|
| | | $J'_{r=0.103}$ | $K_{r=0.103}$ | $L_{r=0.103}$ | $L'_{r=0.103}$ | $M_{r=0.103}$ | $M'_{r=0.103}$ | $N_{r=0.103}$ |
| HFO-1132 (E) | Mass% | 51.6 | 45.4 | 36.8 | 27.3 | 22.0 | 19.7 | 18.3 |
| R32 | Mass% | 15.0 | 21.8 | 1.0 | 5.0 | 10.0 | 15.0 | 21.6 |
| R1234(ze+yf) | Mass% | 33.4 | 32.8 | 62.2 | 67.7 | 68.0 | 65.3 | 60.1 |
| GWP | - | 104 | 150 | 11 | 38 | 72 | 105 | 149 |
| COP Ratio | % (Relative to R404A) | 107 | 107 | 109 | 110 | 110 | 110 | 111 |
| Refrigerating Capacity Ratio | % (Relative to R404A) | 122 | 127 | 80 | 75 | 77 | 83 | 92 |
| Condensation Glide | °C | 5.7 | 5.7 | 9.0 | 10.1 | 10.7 | 10.7 | 10.1 |

| Item | Unit | Com Ex6 | Com Ex7 | Example31 | Example32 | Example33 | Example34 | Example35 | Example36 |
|---|---|---|---|---|---|---|---|---|---|
| | | $A_{r=0.5}$ | $B_{r=0.5}$ | $E_{r=0.5}$ | $E'_{r=0.5}$ | $F_{r=0.5}$ | $I_{r=0.5}$ | $I'_{r=0.5}$ | $J_{r=0.5}$ |
| HFO-1132 (E) | Mass% | 76.9 | 1.0 | 21.8 | 9.2 | 1.0 | 70.3 | 63.8 | 57.1 |
| R32 | Mass% | 22.1 | 21.6 | 1.0 | 10.0 | 16.0 | 1.0 | 5.0 | 10.0 |
| R1234(ze+yf) | Mass% | 1.0 | 77.4 | 77.2 | 80.8 | 83.0 | 28.7 | 31.2 | 32.9 |
| GWP | - | 150 | 150 | 11 | 72 | 112 | 9 | 36 | 70 |
| COP Ratio | % (Relative to R404A) | 105 | 110 | 108 | 109 | 110 | 106 | 106 | 106 |
| Refrigerating Capacity Ratio | % (Relative to R404A) | 170 | 79 | 70 | 70 | 70 | 125 | 125 | 126 |
| Condensation Glide | °C | 0.3 | 8.9 | 7.9 | 9.1 | 8.9 | 3.1 | 3.7 | 4.2 |

Table 5

| Item | Unit | Example37 | Example38 | Example39 | Example40 | Example41 | Example42 | Example43 |
|---|---|---|---|---|---|---|---|---|
| | | $J'_{r=0.5}$ | $K_{r=0.5}$ | $L_{r=0.5}$ | $L'_{r=0.5}$ | $M_{r=0.5}$ | $M'_{r=0.5}$ | $N_{r=0.5}$ |
| HFO-1132 (E) | Mass% | 51.6 | 45.4 | 43.4 | 33.6 | 27.4 | 24.4 | 22.2 |
| R32 | Mass% | 15.0 | 21.8 | 1.0 | 5.0 | 10.0 | 15.0 | 21.8 |
| R1234(ze+yf) | Mass% | 33.4 | 32.8 | 55.6 | 61.4 | 62.6 | 60.6 | 56.0 |
| GWP | - | 103 | 149 | 10 | 37 | 71 | 105 | 150 |
| COP Ratio | % (Relative to R404A) | 106 | 106 | 107 | 107 | 108 | 108 | 108 |
| Refrigerating Capacity Ratio | % (Relative to R404A) | 129 | 133 | 95 | 90 | 92 | 97 | 105 |
| Condensation Glide | °C | 4.4 | 4.3 | 6.4 | 7.6 | 8.2 | 8.2 | 7.6 |

| Item | Unit | Com Ex8 | Com Ex9 | Com Ex10 | Com Ex11 | Com Ex12 | Com Ex13 | Com Ex14 | Com Ex15 |
|---|---|---|---|---|---|---|---|---|---|
| | | $A_{r=1}$ | $B_{r=1}$ | $E_{r=1}$ | $F_{r=1}$ | $I_{r=1}$ | $I'_{r=1}$ | $J_{r=1}$ | $J'_{r=1}$ |
| HFO-1132 (E) | Mass% | 76.9 | 1.0 | 13.6 | 1.0 | 70.3 | 63.8 | 57.1 | 51.6 |
| R32 | Mass% | 22.1 | 21.8 | 1.0 | 9.7 | 1.0 | 5.0 | 10.0 | 15.0 |
| R1234(ze+yf) | Mass% | 1.0 | 77.2 | 85.4 | 89.3 | 28.7 | 31.2 | 32.9 | 33.4 |
| GWP | - | 150 | 150 | 10 | 69 | 9 | 36 | 69 | 103 |
| COP Ratio | % (Relative to R404A) | 105 | 108 | 106 | 107 | 105 | 105 | 105 | 105 |
| Refrigerating Capacity Ratio | % (Relative to R404A) | 170 | 90 | 70 | 70 | 132 | 132 | 134 | 137 |
| Condensation Glide | °C | 0.3 | 6.8 | 5.8 | 6.7 | 1.9 | 2.4 | 2.7 | 2.9 |

| Item | Unit | Com Ex16 | Com Ex17 | Com Ex18 | Com Ex19 | Com Ex20 | Com Ex21 |
|---|---|---|---|---|---|---|---|
| | | $K_{r=1}$ | $L_{r=1}$ | $L'_{r=1}$ | $M_{r=1}$ | $M'_{r=1}$ | $N_{r=1}$ |
| HFO-1132 (E) | Mass% | 45.4 | 49.2 | 39.2 | 32.5 | 29.0 | 26.2 |
| R32 | Mass% | 21.8 | 1.0 | 5.0 | 10.0 | 15.0 | 21.9 |
| R1234(ze+yf) | Mass% | 32.8 | 49.8 | 55.8 | 57.5 | 56.0 | 51.9 |
| GWP | - | 149 | 9 | 36 | 70 | 104 | 150 |
| COP Ratio | % (Relative to R404A) | 105 | 105 | 105 | 106 | 106 | 106 |
| Refrigerating Capacity Ratio | % (Relative to R404A) | 141 | 110 | 106 | 108 | 112 | 120 |
| Condensation Glide | °C | 2.8 | 3.9 | 5.0 | 5.5 | 5.4 | 4.8 |

The coordinates of each point were determined by using an approximate expression in the following manner.

Table 6

| Item | Unit | Point A$_r$ (r=R1234yf/(R1234(ze+yf)) | | | | Point B$_r$ (r=R1234yf/(R1234(ze-yf)) | | | |
|---|---|---|---|---|---|---|---|---|---|
| | | 0.0 | 0.103 | 0.5 | 1.0 | 0.0 | 0.103 | 0.5 | 1 |
| HFO-1132 (E) | Mass% | 76.9 | 76.9 | 76.9 | 76.9 | 1.0 | 1.0 | 1.0 | 1.0 |
| R32 | Mass% | 22.1 | 22.1 | 22.1 | 22.1 | 21.5 | 21.6 | 21.6 | 21.8 |
| R1234(ze+yf) | Mass% | 1.0 | 1.0 | 1.0 | 1.0 | 77.5 | 77.4 | 77.4 | 77.2 |
| x=HFO-1132 (E) | | 76.9 | | | | 1.0 | | | |
| y=R32 | | 22.1 | | | | $0.1885r^2+0.0694r+21.543$ | | | |
| z=R1234(ze+yf) | | 1.0 | | | | $-0.1885r^2-0.0694r+77.457$ | | | |

| Item | Unit | Point E$_r$ (r=R1234yf/(R1234(ze+yf)) | | | | Point E'$_r$ (Midpoint between E$_r$ and F$_r$) | | | |
|---|---|---|---|---|---|---|---|---|---|
| | | 0.0 | 0.103 | 0.5 | 1.0 | 0.0 | 0.103 | 0.5 | 0.967 |
| HFO-1132 (E) | Mass% | 30.2 | 28.5 | 21.8 | 13.6 | 17.8 | 16.0 | 9.2 | 1.0 |
| R32 | Mass% | 1.0 | 1.0 | 1.0 | 1.0 | 10.0 | 10.0 | 10.0 | 10.0 |
| R1234(ze+yf) | Mass% | 68.8 | 70.5 | 77.2 | 85.4 | 72.2 | 74.0 | 80.8 | 89.0 |
| x=HFO-1132 (E) | | $0.3938r^2-17.016r+30.22$ | | | | $-0.3615r^2-17.002r+17.781$ | | | |
| y=R32 | | 1.0 | | | | 10.0 | | | |
| z=R1234(ze+yf) | | $-0.3938r^2+17.016r+68.78$ | | | | $0.3615r^2+17.002r+72.219$ | | | |

| Item | Unit | Point F$_r$ (r=R1234yf/(R1234(ze+yf)) | | | | |
|---|---|---|---|---|---|---|
| | | 0 | 0.103 | 0.103 | 0.5 | 1 |
| HFO-1132 (E) | Mass% | 2.8 | 1.0 | 1.0 | 1.0 | 1.0 |
| R32 | Mass% | 21.6 | 21.6 | 21.6 | 16.0 | 9.7 |
| R1234(ze+yf) | Mass% | 75.6 | 77.4 | 77.4 | 83.0 | 89.3 |
| x=HFO-1132 (E) | | $-17.476r+2.8$ | | 1.0 | | |
| y=R32 | | 21.6 | | $1.6787r^2-15.118r+23.139$ | | |
| z=R1234(ze+yf) | | $17.476r+75.6$ | | $-1.6787r^2+15.118r+75.861$ | | |

| Item | Unit | Point I$_r$ (r=R1234yf/(R1234(ze+yf)) | | | | Point I'r (Midpoint between I$_r$ and J$_r$) | | | | Point J$_r$ (r=R1234yf/(R1234(ze+yf)) | | | |
|---|---|---|---|---|---|---|---|---|---|---|---|---|---|
| | | 0.0 | 0.103 | 0.5 | 1.0 | 0.0 | 0.103 | 0.5 | 0.967 | 0.0 | 0.103 | 0.5 | 1.0 |
| HFO-1132 (E) | Mass% | 70.3 | 70.3 | 70.3 | 70.3 | 63.8 | 63.8 | 63.8 | 63.8 | 57.1 | 57.1 | 57.1 | 57.1 |
| R32 | Mass% | 1.0 | 1.0 | 1.0 | 1.0 | 5.0 | 5.0 | 5.0 | 5.0 | 10.0 | 10.0 | 10.0 | 10.0 |
| R1234(ze+yf) | Mass% | 28.7 | 28.7 | 28.7 | 28.7 | 31.2 | 31.2 | 31.2 | 31.2 | 32.9 | 32.9 | 32.9 | 32.9 |
| x=HFO-1132 (E) | | 70.3 | | | | 63.8 | | | | 57.1 | | | |
| y=R32 | | 1.0 | | | | 5.0 | | | | 10.0 | | | |
| z=R1234(ze+yf) | | 28.7 | | | | 31.2 | | | | 32.9 | | | |

Table 7

| Item | Unit | Point J'$_r$ (Midpoint between J$_r$ and K$_r$) | | | | Point K$_r$ (r=R1234yf/(R1234(ze+yf))) | | | |
|---|---|---|---|---|---|---|---|---|---|
| | | 0.0 | 0.103 | 0.5 | 0.967 | 0.0 | 0.103 | 0.5 | 0.967 |
| HFO-1132 (E) | Mass% | 51.6 | 51.6 | 51.6 | 51.6 | 45.4 | 45.4 | 45.4 | 45.4 |
| R32 | Mass% | 15.0 | 15.0 | 15.0 | 15.0 | 21.8 | 21.8 | 21.8 | 21.8 |
| R1234(ze+yf) | Mass% | 33.4 | 33.4 | 33.4 | 33.4 | 32.8 | 32.8 | 32.8 | 32.8 |
| x=HFO-1132 (E) | | 51.6 | | | | 45.4 | | | |
| y=R32 | | 15.0 | | | | 21.8 | | | |
| z=R1234(ze+yf) | | 33.4 | | | | 32.8 | | | |

| Item | Unit | Point L$_r$ (r=R1234yf/(R1234(ze+yf))) | | | | Point L'r (Midpoint between L$_r$ and M$_r$) | | | | Point M$_r$ (r=R1234yf/(R1234(ze+yf))) | | | |
|---|---|---|---|---|---|---|---|---|---|---|---|---|---|
| | | 0.0 | 0.103 | 0.5 | 1.0 | 0.0 | 0.103 | 0.5 | 0.967 | 0.0 | 0.103 | 0.5 | 1.0 |
| HFO-1132 (E) | Mass% | 34.8 | 36.8 | 43.4 | 49.2 | 25.4 | 27.3 | 33.6 | 39.2 | 20.4 | 22.0 | 27.4 | 32.5 |
| R32 | Mass% | 1.0 | 1.0 | 1.0 | 1.0 | 5.0 | 5.0 | 5.0 | 5.0 | 10.0 | 10.0 | 10.0 | 10.0 |
| R1234(ze+yf) | Mass% | 64.2 | 62.2 | 55.6 | 49.8 | 69.6 | 67.7 | 61.4 | 55.8 | 69.6 | 68.0 | 62.6 | 57.5 |
| x=HFO-1132 (E) | | $-5.5999r^2+20.0r+34.8$ | | | | $-4.5644r^2+18.673r+25.41$ | | | | $-3.8003r^2+15.899r+20.401$ | | | |
| y=R32 | | 1.0 | | | | 5.0 | | | | 10.0 | | | |
| z=R1234(ze+yf) | | $5.5999r^2-20.0r+64.2$ | | | | $4.5644r^2-18.673r+69.59$ | | | | $3.8003r^2-15.899r+69.599$ | | | |

| Item | Unit | Point M'r (Midpoint between M$_r$ and 点N$_r$) | | | | Point N$_r$ (r=R1234yf/(R1234(ze+yf))) | | | |
|---|---|---|---|---|---|---|---|---|---|
| | | 0.0 | 0.103 | 0.5 | 1.0 | 0.0 | 0.103 | 0.5 | 0.967 |
| HFO-1132 (E) | Mass% | 18.3 | 19.7 | 24.4 | 29.0 | 17.1 | 18.3 | 22.2 | 26.2 |
| R32 | Mass% | 15.0 | 15.0 | 15.0 | 15.0 | 21.6 | 21.6 | 21.8 | 21.9 |
| R1234(ze+yf) | Mass% | 66.7 | 65.3 | 60.6 | 56.0 | 61.3 | 60.1 | 56.0 | 51.9 |
| x=HFO-1132 (E) | | $-3.0027r^2+13.693r+18.309$ | | | | $-1.7082r^2+11.022r+17.134$ | | | |
| y=R32 | | 15.0 | | | | $0.3345r+21.594$ | | | |
| z=R1234(ze+yf) | | $3.0027r^2-13.693r+66.691$ | | | | $1.7082r^2-11.3565r+61.272$ | | | |

From these results, it is understood that a mixed refrigerant has a refrigerating capacity of 70% or more relative to R404A and is classified under the category of WCF lower flammability when the mixed refrigerant is represented as follows: when the mass% of HFO-1132(E) is x, the mass% of R32 is y, and the total mass% of R1234ze and R1234yf is z based on the sum of HFO-1132(E), R32, R1234ze, and R1234yf, and r=R1234yf/(R1234ze+R1234yf) in the mixed refrigerant,

in a ternary composition diagram having HFO-1132(E) as a first vertex, R32 as a second vertex, and the sum of 1234ze and R1234yf as a third vertex,
when 0.103≥r>0, coordinates (x,y,z) fall within a figure surrounded by straight lines $I_r I'_r$, $I'_r J_r$, $J_r J'_r$, $J'_r K_r$, $K_r F_r$, $F_r E'_r$, $E'_r E_r$, and $E_r I_r$, which connect the following 8 points, or fall on any of the straight lines:

point $I_r$ (70.3, 1.0, 28.7),
point $I'_r$ (63.8, 5.0, 31.2),
point $J_r$ (57.1, 10.0, 32.9),
point $J'_r$ (51.6, 15.0, 33.4),
point $K_r$ (45.4, 21.8, 32.8),
point $F_r$ (-17.476r+2.8, 21.6, 17.476r+75.6),
point $E'_r$ (-0.3615r$^2$-17.002r+17.781, 10.0,
0.3615r$^2$+17.002r+72.219), and
point $E_r$ (0.3938r$^2$-17.016r+30.22, 1.0, -0.3938r$^2$+17.016r+68.78),

when 1.0>r>0.103, coordinates (x,y,z) fall within a figure surrounded by straight lines $I_r I'_r$, $I'_r J_r$, $J_r J'_r$, $J'_r K_r$, $K_r B_r$, $B_r F_r$, $F_r E'_r$, $E'_r E_r$ and $E_r I_r$, which connect the following 9 points, or fall on any of the straight lines:

point $I_r$ (70.3, 1.0, 28.7),
point $I'_r$ (63.8, 5.0, 31.2),
point $J_r$ (57.1, 10.0, 32.9),
point $J'_r$ (51.6, 15.0, 33.4),
point $K_r$ (45.4, 21.8, 32.8),
point Br (1.0, 0.1885r$^2$+0.0694+21.543, -0.1885r$^2$-0.0694+77.457)
point $F_r$ (1.0, 1.6787r$^2$-15.118r+23.139, -1.6787r$^2$+15.118r+75.861),
point $E'_r$ (-0.3615r$^2$-17.002r+17.781, 10.0,
0.3615r$^2$+17.002r+72.219), and
point $E_r$ (0.3938r$^2$-17.016r+30.22, 1.0, -0.3938r$^2$+17.016r+68.78).

It is also understood that a mixed refrigerant has a refrigerating capacity of 70% or more relative to R404A and is classified under the category of ASHRAE lower flammability when the mixed refrigerant is represented as follows: when the mass% of HFO-1132(E) is x, the mass% of R32 is y, and the total mass% of R1234ze and R1234yf is z based on the sum of HFO-1132(E), R32, R1234ze, and R1234yf, and r=R1234yf/(R1234ze+R1234yf) in the mixed refrigerant,

in a ternary composition diagram having HFO-1132(E) as a first vertex, R32 as a second vertex, and the sum of 1234ze and R1234yf as a third vertex,
when $0.103 \geq r > 0$, coordinates (x,y,z) fall within a figure surrounded by straight lines $L_r I'_r$, $L'_r M_r$, $M_r M'_r$, $M'_r N_r$, $N_r F_r$, $F_r E'_r$, $E'_r E_r$, and $E_r I_r$, which connect the following 8 points, or fall on any of the straight lines:

point $L_r$ ($-5.5999r^2+20.0r+34.87$, 1.0, $5.5999r^2-20.0r+64.2$),
point $L'_r$ ($-4.5644r^2+18.673r+25.41$, 5.0, $4.5644r^2-18.673r+69.59$),
point $M_r$ ($-3.8003r^2+15.899r+20.401$, 10.0, $3.8003r^2-15.899r+69.599$),
point $M'_r$ ($-3.0027r^2+13.693r+18.309$, 15.0, $3.0027r^2-13.693r+66.691$),
point $N_r$ ($-1.7082r^2+11.022r+17.134$, $0.3345r+21.594$, $1.7082r^2-11.3565r+61.272$),
point $F_r$ ($-17.476r+2.8$, 21.6, $17.476r+75.6$),
point $E'_r$ ($-0.3615r^2-17.002r+17.781$, 10.0,
$0.3615r^2+17.002r+72.219$), and
point $E_r$ ($0.3938r^2-17.016r+30.22$, 1.0, $-0.3938r^2+17.016r+68.78$),

when $1.0 > r > 0.103$, coordinates (x,y,z) fall within a figure surrounded by straight lines $L_r L'_r$, $L'_r M_r$, $M_r M'_r$, $M'_r N_r$, $N_r B_r$, $B_r F_r$, $F_r E'_r$, $E'_r E_r$, and $E_r I_r$, which connect the following 9 points, or fall on any of the straight lines:

point $L_r$ ($-5.5999r^2+20.0r+34.87$, 1.0, $5.5999r^2-20.0r+64.2$),
point $L'_r$ ($-4.5644r^2+18.673r+25.41$, 5.0, $4.5644r^2-18.673r+69.59$),
point $M_r$ ($-3.8003r^2+15.899r+20.401$, 10.0, $3.8003r^2-15.899r+69.599$),
point $M'_r$ ($-3.0027r^2+13.693r+18.309$, 15.0, $3.0027r^2-13.693r+66.691$),
point $N_r$ ($-1.7082r^2+11.022r+17.134$, $0.3345r+21.594$, $1.7082r^2-11.3565r+61.272$),
point $B_r$ (1.0, $0.1885r^2+0.0694r+21.543$, $-0.1885r^2-0.0694r+77.457$) point $F_r$ (1.0, $1.6787r^2-15.118r+23.139$,
$-1.6787r^2+15.118r+75.861$), point $E'_r$ ($-0.3615r^2-17.002r+17.781$, 10.0,
$0.3615r^2+17.002r+72.219$), and
point $E_r$ ($0.3938r^2-17.016r+30.22$, 1.0, $-0.3938r^2+17.016r+68.78$).

Example C

Mixed refrigerants were prepared such that the mass% of HFO-1132(E), the mass% of R32, and the total mass% of R1234ze and R1234yf were as shown in Tables 8 to 11 based on the sum of HFO-1132(E), R32, R1234ze, and R1234yf, and evaluated in the same manner as in Example A. Tables 8 to 11 show the results. The alphabetical letter "r" represents R1234yf/(R1234ze+R1234yf).

Table 8

| Item | Unit | Com Ex22 | Com Ex23 | Com Ex24 | Com Ex25 | Com Ex26 | Example44 | Example45 | Example46 |
|---|---|---|---|---|---|---|---|---|---|
| HFO-1132 (E) | Mass% | 70.0 | 65.0 | 60.0 | 55.0 | 50.0 | 60.0 | 55.0 | 50.0 |
| R32 | Mass% | 5.0 | 10.0 | 15.0 | 20.0 | 25.0 | 5.0 | 10.0 | 15.0 |
| R1234ze (r=0) | Mass% | 25.0 | 25.0 | 25.0 | 25.0 | 25.0 | 35.0 | 35.0 | 35.0 |
| GWP | - | 36 | 70 | 103 | 137 | 171 | 36 | 70 | 104 |
| COP Ratio | % (Relative to R404A) | 106 | 106 | 106 | 106 | 107 | 107 | 107 | 107 |
| Refrigerating Capacity Ratio | % (Relative to R404A) | 126 | 129 | 132 | 135 | 137 | 113 | 116 | 119 |
| Condensation Glide | °C | 4.0 | 4.3 | 4.5 | 4.5 | 4.6 | 5.8 | 6.1 | 6.3 |

| Item | Unit | Example47 | Com Ex27 | Example48 | Example49 | Example50 | Example51 | Com Ex28 | Example52 |
|---|---|---|---|---|---|---|---|---|---|
| HFO-1132 (E) | Mass% | 45.0 | 40.0 | 55.0 | 50.0 | 45.0 | 40.0 | 35.0 | 50.0 |
| R32 | Mass% | 20.0 | 25.0 | 5.0 | 10.0 | 15.0 | 20.0 | 25.0 | 5.0 |
| R1234ze (r=0) | Mass% | 35.0 | 35.0 | 40.0 | 40.0 | 40.0 | 40.0 | 40.0 | 45.0 |
| GWP | - | 138 | 171 | 37 | 70 | 104 | 138 | 172 | 37 |
| COP Ratio | % (Relative to R404A) | 108 | 108 | 107 | 108 | 108 | 108 | 108 | 108 |
| Refrigerating Capacity Ratio | % (Relative to R404A) | 121 | 124 | 107 | 110 | 112 | 115 | 117 | 101 |
| Condensation Glide | °C | 6.4 | 6.5 | 6.6 | 7.0 | 7.3 | 7.4 | 7.4 | 7.5 |

| Item | Unit | Example53 | Example54 | Example55 | Com Ex29 | Example56 | Example57 | Example58 | Example59 |
|---|---|---|---|---|---|---|---|---|---|
| HFO-1132 (E) | Mass% | 45.0 | 40.0 | 35.0 | 30.0 | 45.0 | 40.0 | 35.0 | 30.0 |
| R32 | Mass% | 10.0 | 15.0 | 20.0 | 25.0 | 5.0 | 10.0 | 15.0 | 20.0 |
| R1234ze (r=0) | Mass% | 45.0 | 45.0 | 45.0 | 45.0 | 50.0 | 50.0 | 50.0 | 50.0 |
| GWP | - | 71 | 104 | 138 | 172 | 37 | 71 | 105 | 138 |
| COP Ratio | % (Relative to R404A) | 108 | 108 | 109 | 109 | 108 | 109 | 109 | 109 |

EP 3 988 868 A1

| Item | Unit | Example53 | Example54 | Example55 | Com Ex29 | Example56 | Example57 | Example58 | Example59 |
|---|---|---|---|---|---|---|---|---|---|
| Refrigerating Capacity Ratio | % (Relative to R404A) | 104 | 106 | 108 | 110 | 95 | 97 | 100 | 102 |
| Condensation Glide | °C | 7.9 | 8.2 | 8.3 | 8.3 | 8.3 | 8.8 | 9.1 | 9.2 |

| Item | Unit | Com Ex30 | Example60 | Example61 | Example62 | Example63 | Com Ex31 | Example64 | Example65 |
|---|---|---|---|---|---|---|---|---|---|
| HFO-1132 (E) | Mass% | 25.0 | 40.0 | 35.0 | 30.0 | 25.0 | 20.0 | 35.0 | 30.0 |
| R32 | Mass% | 25.0 | 5.0 | 10.0 | 15.0 | 20.0 | 25.0 | 5.0 | 10.0 |
| R1234ze (r=0) | Mass% | 50.0 | 55.0 | 55.0 | 55.0 | 55.0 | 55.0 | 60.0 | 60.0 |
| GWP | - | 172 | 37 | 71 | 105 | 139 | 172 | 38 | 71 |
| COP Ratio | % (Relative to R404A) | 110 | 109 | 109 | 110 | 110 | 111 | 110 | 110 |
| Refrigerating Capacity Ratio | % (Relative to R404A) | 104 | 89 | 91 | 94 | 96 | 97 | 83 | 85 |
| Condensation Glide | °C | 9.2 | 9.1 | 9.6 | 9.9 | 10.0 | 9.9 | 9.8 | 10.3 |

| Item | Unit | Example66 | Example67 | Com Ex32 | Example68 | Example69 | Example70 | Example71 | Com Ex33 |
|---|---|---|---|---|---|---|---|---|---|
| HFO-1132 (E) | Mass% | 25.0 | 20.0 | 15.0 | 30.0 | 25.0 | 20.0 | 15.0 | 10.0 |
| R32 | Mass% | 15.0 | 20.0 | 25.0 | 5.0 | 10.0 | 15.0 | 20.0 | 25.0 |
| R1234ze (r=0) | Mass% | 60.0 | 60.0 | 60.0 | 65.0 | 65.0 | 65.0 | 65.0 | 65.0 |
| GWP | - | 105 | 139 | 173 | 38 | 72 | 105 | 139 | 173 |
| COP Ratio | % (Relative to R404A) | 110 | 111 | 111 | 110 | 110 | 111 | 111 | 112 |
| Refrigerating Capacity Ratio | % (Relative to R404A) | 87 | 89 | 91 | 77 | 79 | 81 | 83 | 85 |
| Condensation Glide | °C | 10.6 | 10.7 | 10.6 | 10.4 | 10.9 | 11.2 | 11.2 | 11.0 |

| Item | Unit | Example72 | Example73 | Example74 | Example75 | Com Ex34 | Com Ex35 | Com Ex36 | Com Ex37 |
|---|---|---|---|---|---|---|---|---|---|
| HFO-1132 (E) | Mass% | 25.0 | 20.0 | 15.0 | 10.0 | 5.0 | 15.0 | 10.0 | 5.0 |

EP 3 988 868 A1

(continued)

| Item | Unit | Example72 | Example73 | Example74 | Example75 | Com Ex34 | Com Ex35 | Com Ex36 | Com Ex37 |
|---|---|---|---|---|---|---|---|---|---|
| R32 | Mass% | 5.0 | 10.0 | 15.0 | 20.0 | 25.0 | 5.0 | 10.0 | 15.0 |
| R1234ze (r=0) | Mass% | 70.0 | 70.0 | 70.0 | 70.0 | 70.0 | 80.0 | 80.0 | 80.0 |
| GWP | - | 38 | 72 | 106 | 139 | 173 | 39 | 72 | 106 |
| COP Ratio | % (Relative to R404A) | 110 | 111 | 111 | 112 | 113 | 111 | 112 | 112 |
| Refrigerating Capacity Ratio | % (Relative to R404A) | 71 | 73 | 75 | 77 | 78 | 59 | 61 | 63 |
| Condensation Glide | °C | 10.8 | 11.3 | 11.5 | 11.4 | 11.1 | 10.6 | 11.1 | 11.2 |

Table 9

| Item | Unit | Com Ex38 | Com Ex39 | Com Ex40 | Com Ex41 | Com Ex42 | Example 76 | Example 77 | Example 78 |
|---|---|---|---|---|---|---|---|---|---|
| HFO-1132 (E) | Mass% | 70.0 | 65.0 | 60.0 | 55.0 | 50.0 | 60.0 | 55.0 | 50.0 |
| R32 | Mass% | 5.0 | 10.0 | 15.0 | 20.0 | 25.0 | 5.0 | 10.0 | 15.0 |
| R1234(ze+yf) r=0.103 | Mass% | 25.0 | 25.0 | 25.0 | 25.0 | 25.0 | 35.0 | 35.0 | 35.0 |
| GWP | - | 36 | 70 | 103 | 137 | 171 | 36 | 70 | 104 |
| COP Ratio | % (Relative to R404A) | 106 | 106 | 106 | 106 | 107 | 107 | 107 | 107 |
| Refrigerating Capacity Ratio | % (Relative to R404A) | 127 | 131 | 133 | 136 | 138 | 115 | 118 | 120 |
| Condensation Glide | °C | 3.8 | 4.1 | 4.2 | 4.3 | 4.3 | 5.4 | 5.8 | 6.0 |

| Item | Unit | Example 79 | Com Ex43 | Example80 | Example81 | Example82 | Example83 | Com Ex44 | Example84 |
|---|---|---|---|---|---|---|---|---|---|
| HFO-1132 (E) | Mass% | 45.0 | 40.0 | 55.0 | 50.0 | 45.0 | 40.0 | 35.0 | 50.0 |
| R32 | Mass% | 20.0 | 25.0 | 5.0 | 10.0 | 15.0 | 20.0 | 25.0 | 5.0 |
| R1234(ze+yf) r=0.103 | Mass% | 35.0 | 35.0 | 40.0 | 40.0 | 40.0 | 40.0 | 40.0 | 45.0 |
| GWP | - | 137 | 171 | 37 | 70 | 104 | 138 | 171 | 37 |
| COP Ratio | % (Relative to R404A) | 107 | 108 | 107 | 107 | 108 | 108 | 108 | 108 |
| Refrigerating Capacity Ratio | % (Relative to R404A) | 123 | 125 | 109 | 111 | 114 | 116 | 119 | 102 |
| Condensation Glide | °C | 6.1 | 6.1 | 6.3 | 6.6 | 6.9 | 7.0 | 7.0 | 7.1 |

| Item | Unit | Example85 | Example86 | Example87 | Com Ex45 | Example88 | Example89 | Example90 | Example9l |
|---|---|---|---|---|---|---|---|---|---|
| HFO-1132 (E) | Mass% | 45.0 | 40.0 | 35.0 | 30.0 | 45.0 | 40.0 | 35.0 | 30.0 |
| R32 | Mass% | 10.0 | 15.0 | 20.0 | 25.0 | 5.0 | 10.0 | 15.0 | 20.0 |

EP 3 988 868 A1

| Item | Unit | Example85 | Example86 | Example87 | Com Ex45 | Example88 | Example89 | Example90 | Example9I |
|---|---|---|---|---|---|---|---|---|---|
| R1234(ze+yf) r=0.103 | Mass% | 45.0 | 45.0 | 45.0 | 45.0 | 50.0 | 50.0 | 50.0 | 50.0 |
| GWP | - | 71 | 104 | 138 | 172 | 37 | 71 | 104 | 138 |
| COP Ratio | % (Relative to R404A) | 108 | 108 | 108 | 109 | 108 | 108 | 109 | 109 |
| Refrigerating Capacity Ratio | % (Relative to R404A) | 105 | 108 | 110 | 112 | 96 | 99 | 102 | 104 |
| Condensation Glide | °C | 7.5 | 7.8 | 7.9 | 7.9 | 7.9 | 8.3 | 8.6 | 8.7 |

| Item | Unit | Com Ex46 | Example92 | Example93 | Example94 | Example95 | Com Ex47 | Example96 | Example97 |
|---|---|---|---|---|---|---|---|---|---|
| HFO-1132 (E) | Mass% | 25.0 | 40.0 | 35.0 | 30.0 | 25.0 | 20.0 | 35.0 | 30.0 |
| R32 | Mass% | 25.0 | 5.0 | 10.0 | 15.0 | 20.0 | 25.0 | 5.0 | 10.0 |
| R1234(ze+yf) r=0.103 | Mass% | 50.0 | 55.0 | 55.0 | 55.0 | 55.0 | 55.0 | 60.0 | 60.0 |
| GWP | - | 172 | 37 | 71 | 105 | 138 | 172 | 38 | 71 |
| COP Ratio | % (Relative to R404A) | 109 | 109 | 109 | 109 | 110 | 110 | 109 | 109 |
| Refrigerating Capacity Ratio | % (Relative to R404A) | 106 | 90 | 93 | 95 | 98 | 99 | 85 | 87 |
| Condensation Glide | °C | 8.7 | 8.6 | 9.1 | 9.4 | 9.5 | 9.4 | 9.3 | 9.8 |

| Item | Unit | Example98 | Example99 | Com Ex48 | Example100 | Example101 | Example102 | Example103 | Com Ex49 |
|---|---|---|---|---|---|---|---|---|---|
| HFO-1132 (E) | Mass% | 25.0 | 20.0 | 15.0 | 30.0 | 25.0 | 20.0 | 15.0 | 10.0 |
| R32 | Mass% | 15.0 | 20.0 | 25.0 | 5.0 | 10.0 | 15.0 | 20.0 | 25.0 |
| R1234(ze+yf) r=0.103 | Mass% | 60.0 | 60.0 | 60.0 | 65.0 | 65.0 | 65.0 | 65.0 | 65.0 |
| GWP | - | 105 | 139 | 172 | 38 | 72 | 105 | 139 | 173 |

| Item | Unit | Example98 | Example99 | Com Ex48 | Example100 | Example101 | Example102 | Example103 | Com Ex49 |
|---|---|---|---|---|---|---|---|---|---|
| COP Ratio | % (Relative to R404A) | 110 | 110 | 111 | 110 | 110 | 110 | 111 | 111 |
| Refrigerating Capacity Ratio | % (Relative to R404A) | 89 | 91 | 93 | 79 | 81 | 83 | 85 | 87 |
| Condensation Glide | °C | 10.1 | 10.1 | 10.0 | 9.9 | 10.4 | 10.6 | 10.7 | 10.4 |

| Item | Unit | Example104 | Example105 | Example106 | Example107 | Com Ex50 | Com Ex51 | Com Ex52 | Com Ex53 |
|---|---|---|---|---|---|---|---|---|---|
| HFO-1132 (E) | Mass% | 25.0 | 20.0 | 15.0 | 10.0 | 5.0 | 15.0 | 10.0 | 5.0 |
| R32 | Mass% | 5.0 | 10.0 | 15.0 | 20.0 | 25.0 | 5.0 | 10.0 | 15.0 |
| R1234(ze+yf) r=0.103 | Mass% | 70.0 | 70.0 | 70.0 | 70.0 | 70.0 | 80.0 | 80.0 | 80.0 |
| GWP | - | 38 | 72 | 105 | 139 | 173 | 39 | 72 | 106 |
| COP Ratio | % (Relative to R404A) | 110 | 110 | 111 | 111 | 112 | 111 | 111 | 112 |
| Refrigerating Capacity Ratio | % (Relative to R404A) | 73 | 75 | 77 | 79 | 80 | 61 | 63 | 65 |
| Condensation Glide | °C | 10.3 | 10.8 | 11.0 | 10.9 | 10.6 | 10.2 | 10.7 | 10.8 |

EP 3 988 868 A1

# Table 11

| Item | Unit | Com Ex54 | Com Ex55 | Com Ex56 | Com Ex57 | Com Ex58 | Example108 | Example109 | Example110 |
|---|---|---|---|---|---|---|---|---|---|
| HFO-1132 (E) | Mass% | 70.0 | 65.0 | 60.0 | 55.0 | 50.0 | 60.0 | 55.0 | 50.0 |
| R32 | Mass% | 5.0 | 10.0 | 15.0 | 20.0 | 25.0 | 5.0 | 10.0 | 15.0 |
| R1234(ze+yf) r=0.5 | Mass% | 25.0 | 25.0 | 25.0 | 25.0 | 25.0 | 35.0 | 35.0 | 35.0 |
| GWP | - | 36 | 69 | 103 | 137 | 171 | 36 | 70 | 104 |
| COP Ratio | % (Relative to R404A) | 106 | 106 | 106 | 106 | 106 | 106 | 106 | 106 |
| Refrigerating Capacity Ratio | % (Relative to R404A) | 132 | 135 | 138 | 141 | 144 | 121 | 124 | 127 |
| Condensation Glide | °C | 2.9 | 3.1 | 3.2 | 3.3 | 3.2 | 4.2 | 4.5 | 4.6 |

| Item | Unit | Example111 | Com Ex59 | Example112 | Example113 | Example114 | Example115 | Com Ex60 | Example116 |
|---|---|---|---|---|---|---|---|---|---|
| HFO-1132 (E) | Mass% | 45.0 | 40.0 | 55.0 | 50.0 | 45.0 | 40.0 | 35.0 | 50.0 |
| R32 | Mass% | 20.0 | 25.0 | 5.0 | 10.0 | 15.0 | 20.0 | 25.0 | 5.0 |
| R1234(ze+yf) r=0.5 | Mass% | 35.0 | 35.0 | 40.0 | 40.0 | 40.0 | 40.0 | 40.0 | 45.0 |
| GWP | - | 137 | 171 | 36 | 70 | 104 | 137 | 171 | 37 |
| COP Ratio | % (Relative to R404A) | 106 | 107 | 106 | 106 | 106 | 107 | 107 | 106 |
| Refrigerating Capacity Ratio | % (Relative to R404A) | 129 | 132 | 115 | 118 | 121 | 123 | 126 | 109 |
| Condensation Glide | °C | 4.6 | 4.6 | 4.9 | 5.2 | 5.3 | 5.4 | 5.3 | 5.5 |

| Item | Unit | Example117 | Example118 | Example119 | Com Ex61 | Example120 | Example121 | Example122 | Example123 |
|---|---|---|---|---|---|---|---|---|---|
| HFO-1132 (E) | Mass% | 45.0 | 40.0 | 35.0 | 30.0 | 45.0 | 40.0 | 35.0 | 30.0 |
| R32 | Mass% | 10.0 | 15.0 | 20.0 | 25.0 | 5.0 | 10.0 | 15.0 | 20.0 |
| R1234(ze+yf) r=0.5 | Mass% | 45.0 | 45.0 | 45.0 | 45.0 | 50.0 | 50.0 | 50.0 | 50.0 |
| GWP | - | 70 | 104 | 138 | 171 | 37 | 70 | 104 | 138 |
| COP Ratio | % (Relative to R404A) | 107 | 107 | 107 | 107 | 107 | 107 | 107 | 108 |
| Refrigerating Capacity Ratio | % (Relative to R404A) | 112 | 115 | 117 | 120 | 104 | 106 | 109 | 111 |
| Condensation Glide | °C | 5.9 | 6.0 | 6.1 | 6.0 | 6.2 | 6.6 | 6.8 | 6.8 |

| Item | Unit | Com Ex50 | Example124 | Example125 | Example126 | Example127 | Com Ex62 | Example128 | Example129 | Example130 |
|---|---|---|---|---|---|---|---|---|---|---|
| HFO-1132 (E) | Mass% | 25.0 | 40.0 | 35.0 | 30.0 | 25.0 | 20.0 | 35.0 | 30.0 | 25.0 |
| R32 | Mass% | 25.0 | 5.0 | 10.0 | 15.0 | 20.0 | 25.0 | 5.0 | 10.0 | 15.0 |
| R1234(ze+yf) r=0.5 | Mass% | 50.0 | 55.0 | 55.0 | 55.0 | 55.0 | 55.0 | 60.0 | 60.0 | 60.0 |
| GWP | - | 172 | 37 | 71 | 104 | 138 | 172 | 37 | 71 | 105 |
| COP Ratio | % (Relative to R404A) | 108 | 107 | 107 | 108 | 108 | 108 | 107 | 108 | 108 |
| Refrigerating Capacity Ratio | % (Relative to R404A) | 114 | 98 | 101 | 103 | 105 | 107 | 92 | 95 | 97 |
| Condensation Glide | °C | 6.7 | 6.9 | 7.3 | 7.4 | 7.5 | 7.3 | 7.5 | 7.9 | 8.1 |

| Item | Unit | Example131 | Com Ex63 | Example132 | Example133 | Example134 | Example135 | Com Ex64 | Example136 | Example137 |
|---|---|---|---|---|---|---|---|---|---|---|
| HFO-1132 (E) | Mass% | 20.0 | 15.0 | 30.0 | 25.0 | 20.0 | 15.0 | 10.0 | 25.0 | 20.0 |
| R32 | Mass% | 20.0 | 25.0 | 5.0 | 10.0 | 15.0 | 20.0 | 25.0 | 5.0 | 10.0 |
| R1234(ze+yf) r=0.5 | Mass% | 60.0 | 60.0 | 65.0 | 65.0 | 65.0 | 65.0 | 65.0 | 70.0 | 70.0 |
| GWP | - | 138 | 172 | 37 | 71 | 105 | 138 | 172 | 38 | 71 |
| COP Ratio | % (Relative to R404A) | 109 | 109 | 108 | 108 | 109 | 109 | 110 | 108 | 108 |
| Refrigerating Capacity Ratio | % (Relative to R404A) | 99 | 101 | 86 | 89 | 91 | 93 | 95 | 80 | 83 |
| Condensation Glide | °C | 8.1 | 7.9 | 8.0 | 8.5 | 8.6 | 8.6 | 8.3 | 8.4 | 8.9 |

| Item | Unit | Example138 | Example139 | Com Ex65 | Example140 | Example141 | Example142 | Example143 | Com Ex66 | Com Ex67 |
|---|---|---|---|---|---|---|---|---|---|---|
| HFO-1132 (E) | Mass% | 15.0 | 10.0 | 5.0 | 20.0 | 15.0 | 10.0 | 5.0 | 10.0 | 5.0 |
| R32 | Mass% | 15.0 | 20.0 | 25.0 | 5.0 | 10.0 | 15.0 | 20.0 | 5.0 | 10.0 |
| R1234(ze+yf) r=0.5 | Mass% | 70.0 | 70.0 | 70.0 | 75.0 | 75.0 | 75.0 | 75.0 | 85.0 | 85.0 |
| GWP | - | 105 | 139 | 172 | 38 | 71 | 105 | 139 | 38 | 72 |
| COP Ratio | % (Relative to R404A) | 109 | 109 | 110 | 108 | 109 | 109 | 110 | 109 | 109 |
| Refrigerating Capacity Ratio | % (Relative to R404A) | 85 | 87 | 89 | 75 | 77 | 79 | 81 | 63 | 65 |
| Condensation Glide | °C | 9.0 | 8.9 | 8.6 | 8.6 | 9.1 | 9.3 | 9.1 | 8.2 | 8.7 |

| Item | Unit |
|---|---|
| HFO-1132 (E) | Mass% |
| R32 | Mass% |
| R1234(ze+yf) r=0.5 | Mass% |
| GWP | - |
| COP Ratio | % (Relative to R404A) |
| Refrigerating Capacity Ratio | % (Relative to R404A) |
| Condensation Glide | °C |

Description of the Reference Numerals

1: Sample cell
2: High-speed camera
3: Xenon lamp
4: Collimating lens
5: Collimating lens
6: Ring filter

**Claims**

1. A composition comprising a refrigerant, the refrigerant comprising trans-1,2-difluoroethylene (HFO-1132(E)), difluoromethane (R32), and 1,3,3,3-tetrafluoropropene (R1234ze).

2. The composition according to claim 1,
   wherein

   when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments IJ, JK, KF, FE, and EI, which connect the following 5 points, or fall on any of the line segments:

   point I (70.3, 1.0, 28.7),
   point J (57.1, 10.0, 32.9),
   point K (45.4, 21.8, 32.8),
   point F (2.8, 21.6, 75.6), and
   point E (30.2, 1.0, 68.8),

   line segments KF and EI are straight lines,
   coordinates (x,y,z) of a point on line segment IJ are represented by (x, $0.00991x^2-1.945x+88.734$, $-0.00991x^2+0.945x+11.266$),
   coordinates (x,y,z) of a point on line segment JK are represented by (x, $0.01605x^2-2.6528x+109.17$, $-0.01605x^2+1.6528x-9.17$), and
   coordinates (x,y,z) of a point on line segment FE are represented by (x, $0.0017x^2-0.8094x+23.852$, $-0.0017x^2-0.1906x+76.148$).

3. The composition according to claim 1,
   wherein

   when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments IJ, JK, KD, DC, and CI, which connect the following 5 points, or fall on any of the line segments:

   point I (70.3, 1.0, 28.7),
   point J (57.1, 10.0, 32.9),
   point K (45.4, 21.8, 32.8),
   point D (10.7, 21.6, 67.7), and
   point C (38.6, 1.0, 60.4),

   line segments KD and CI are straight lines,
   coordinates (x,y,z) of a point on line segment IJ are represented by (x, $0.00991x^2-1.945x+88.734$, $-0.00991x^2+0.945x+11.266$),
   coordinates (x,y,z) of a point on line segment JK are represented by (x, $0.01605x^2-2.6528x+109.17$, $-0.01605x^2+1.6528x-9.17$), and
   coordinates (x,y,z) of a point on line segment DC are represented by (x, $0.00195x^2-0.8346x+30.307$, $-0.00195x^2-0.1654x+69.693$).

4. The composition according to claim 1,
   wherein

   when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments LM, MN, NF, FE, and EL, which connect the following 5 points, or fall on any of the line segments:

   point L (34.8, 1.0, 64.2),

point M (20.4, 10.0, 69.6),
point N (17.1, 21.6, 61.3),
point F (2.8, 21.6, 75.6), and
point E (30.2, 1.0, 68.8),

line segments NF and EL are straight lines,
coordinates (x,y,z) of a point on line segment LM are represented by (x, $0.0399x^2$-2.8271x+51.071,-$0.0399x^2$+1.8271x+48.929),
coordinates (x,y,z) of a point on line segment MN are represented by (x, $0.9452x^2$-38.959x+411.42, $-0.9452x^2$+37.959x-311.42), and
coordinates (x,y,z) of a point on line segment FE are represented by (x, $0.0017x^2$-0.8094x+23.852, $-0.0017x^2$-0.1906x+76.148).

5. The composition according to claim 1,
wherein

when the mass% of HFO-1132(E), R32, and R1234ze based on their sum in the refrigerant is respectively x, y, and z, coordinates (x,y,z) in a ternary composition diagram in which the sum of HFO-1132(E), R32, and R1234ze is 100 mass% fall within a figure surrounded by line segments ON, ND, and DO, which connect the following 3 points, or fall on any of line segments ON, ND, and DO:

point 0(18.1, 15.8, 66.1),
point N (17.1, 21.6, 61.3), and
point D(10.7, 21.6, 67.7),

line segment ND is a straight line,
coordinates (x,y,z) of a point on line segment ON are represented by (x, $0.9452x^2$-38.959x+411.42, $-0.9452x^2$+37.959x-311.42), and
coordinates (x,y,z) of a point on line segment DO are represented by (x, $0.00195x^2$-0.8346x+30.307, $-0.00195x^2$-0.1654x+69.693).

6. The composition according to any one of claims 1 to 5, wherein the refrigerant further comprises 2,3,3,3-tetrafluoropropene (R1234yf).

7. The composition according to claim 6,
wherein

when the mass% of HFO-1132(E) is x, the mass% of R32 is y, and the total mass% of R1234ze and R1234yf is z based on the sum of HFO-1132(E), R32, R1234ze, and R1234yf, and r=R1234yf/(R1234ze+R1234yf) in the refrigerant,
in a ternary composition diagram having HFO-1132(E) as a first vertex, R32 as a second vertex, and the sum of 1234ze and R1234yf as a third vertex,
when 0.103≥r>0, coordinates (x,y,z) fall within a figure surrounded by straight lines $I_r I'_r$, $I'_r J_r$, $J_r J'_r$, $J'_r K_r$, $K_r F_r$, $F_r E'_r$, $E'_r E_r$, and $E_r I_r$, which connect the following 8 points, or fall on any of the straight lines:

point $I_r$ (70.3, 1.0, 28.7),
point $I'_r$ (63.8, 5.0, 31.2),
point $J_r$ (57.1, 10.0, 32.9),
point $J'_r$ (51.6, 15.0, 33.4),
point $K_r$ (45.4, 21.8, 32.8),
point $F_r$ (-17.476r+2.8, 21.6, 17.476r+75.6),
point $E'_r$ (-$0.3615r^2$-17.002r+17.781, 10.0, $0.3615r^2$+17.002r+72.219), and
point $E_r$ ($0.3938r^2$-17.016r+30.22, 1.0, -$0.3938r^2$+17.016r+68.78),

when 1.0>r>0.103, coordinates (x,y,z) fall within a figure surrounded by straight lines $I_r I'_r$, $I'_r J_r$, $J_r J'_r$, $J'_r K_r$, $K_r B_r$, $B_r F_r$, $F_r E'_r$, $E'_r E_r$ and $E_r I_r$, which connect the following 9 points, or fall on any of the straight lines:

point $I_r$ (70.3, 1.0, 28.7),
point $I'_r$ (63.8, 5.0, 31.2),
point $J_r$ (57.1, 10.0, 32.9),
point $J'_r$ (51.6, 15.0, 33.4),
point $K_r$ (45.4, 21.8, 32.8),
point $Br$ (1.0, $0.1885r^2+0.0694+21.543$, $-0.1885r^2-0.0694+77.457$) point $F_r$ (1.0, $1.6787r^2-15.118r+23.139$, $-1.6787r^2+15.118r+75.861$),
point $E'_r$ ($-0.3615r^2-17.002r+17.781$, 10.0, $0.3615r^2+17.002r+72.219$), and
point $E_r$ ($0.3938r^2-17.016r+30.22$, 1.0, $-0.3938r^2+17.016r+68.78$).

8. The composition according to claim 6, wherein

when the mass% of HFO-1132(E) is x, the mass% of R32 is y, and the total mass% of R1234ze and R1234yf is z based on the sum of HFO-1132(E), R32, R1234ze, and R1234yf, and r=R1234yf/(R1234ze+R1234yf) in the refrigerant,
in a ternary composition diagram having HFO-1132(E) as a first vertex, R32 as a second vertex, and the sum of 1234ze and R1234yf as a third vertex,
when 0.103≥r>0, coordinates (x,y,z) fall within a figure surrounded by straight lines $L_rI'_r$, $L'_rM_r$, $M_rM'_r$, $M'_rN_r$, $N_rF_r$, $F_rE'_r$, $E'_rE_r$, and $E_rI_r$, which connect the following 8 points, or fall on any of the straight lines:

point $L_r$ ($-5.5999r^2+20.0r+34.87$, 1.0, $5.5999r^2-20.0r+64.2$),
point $L'_r$ ($-4.5644r^2+18.673r+25.41$, 5.0, $4.5644r^2-18.673r+69.59$),
point $M_r$ ($-3.8003r^2+15.899r+20.401$, 10.0, $3.8003r^2-15.899r+69.599$),
point $M'_r$ ($-3.0027r^2+13.693r+18.309$, 15.0, $3.0027r^2-13.693r+66.691$),
point $N_r$ ($-1.7082r^2+11.022r+17.134$, $0.3345r+21.594$, $1.7082r^2-11.3565r+61.272$),
point $F_r$ ($-17.476r+2.8$, 21.6, $17.476r+75.6$),
point $E'_r$ ($-0.3615r^2-17.002r+17.781$, 10.0, $0.3615r^2+17.002r+72.219$), and
point $E_r$ ($0.3938r^2-17.016r+30.22$, 1.0, $-0.3938r^2+17.016r+68.78$),

when 1.0>r>0.103, coordinates (x,y,z) fall within a figure surrounded by straight lines $L_rL'_r$, $L'_rM_r$, $M_rM'_r$, $M'_rN_r$, $N_rB_r$, $B_rF_r$, $F_rE'_r$, $E'_rE_r$, and $E_rI_r$, which connect the following 9 points, or fall on any of the straight lines:

point $L_r$ ($-5.5999r^2+20.Or+34.87$, 1.0, $5.5999r^2-20.0r+64.2$),
point $L'_r$ ($-4.5644r^2+18.673r+25.41$, 5.0, $4.5644r^2-18.673r+69.59$),
point $M_r$ ($-3.8003r^2+15.899r+20.401$, 10.0, $3.8003r^2-15.899r+69.599$),
point $M'_r$ ($-3.0027r^2+13.693r+18.309$, 15.0, $3.0027r^2-13.693r+66.691$),
point $N_r$ ($-1.7082r^2+11.022r+17.134$, $0.3345r+21.594$, $1.7082r^2-11.3565r+61.272$),
point $B_r$ (1.0, $0.1885r^2+0.0694r+21.543$, $-0.1885r^2-0.0694r+77.457$) point $F_r$ (1.0, $1.6787r^2-15.118r+23.139$, $-1.6787r^2+15.118r+75.861$),
point $E'_r$ ($-0.3615r^2-17.002r+17.781$, 10.0, $0.3615r^2+17.002r+72.219$), and
point $E_r$ ($0.3938r^2-17.016r+30.22$, 1.0, $-0.3938r^2+17.016r+68.78$).

9. The composition according to any one of claims 1 to 8, which is for use as a working fluid for a refrigerating machine, the composition further comprising a refrigeration oil.

10. The composition according to any one of claims 1 to 9, which is for use as an alternative refrigerant for R404A.

11. Use of the composition of any one of claims 1 to 9 as an alternative refrigerant for R404A.

12. A refrigerating machine comprising the composition of any one of claims 1 to 9 as a working fluid.

13. A method for operating a refrigerating machine, comprising circulating the composition of any one of claims 1 to 9 as a working fluid in a refrigerating machine.

Fig. 1

Fig. 2

Fig. 3

## INTERNATIONAL SEARCH REPORT

| International application No. |
|---|
| PCT/JP2020/024180 |

### A. CLASSIFICATION OF SUBJECT MATTER
F25B 1/00(2006.01)i; C09K 5/04(2006.01)i
FI: C09K5/04 F; C09K5/04 E; F25B1/00 396Z

According to International Patent Classification (IPC) or to both national classification and IPC

### B. FIELDS SEARCHED

Minimum documentation searched (classification system followed by classification symbols)
F25B1/00; C09K5/04

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| Y | WO 2015/180557 A1 (ASAHI GLASS CO., LTD.) 10.12.2015 (2015-12-10) claims, paragraphs [0002]-[0019], [0078]-[0085], [0094]-[0095], [0123]-[0129], examples 71-84, 99-140 | 1-13 |
| Y | WO 2015/186558 A1 (ASAHI GLASS CO., LTD.) 10.12.2015 (2015-12-10) claims, paragraphs [0013], [0045]-[0046], examples 1-9, 20-28 | 1-13 |
| Y | WO 2019/021726 A1 (DAIKIN INDUSTRIES, LTD.) 31.01.2019 (2019-01-31) claims, paragraphs [0015], [0055]-[0062], examples 1-1, 2-4, 2-5 | 10, 11 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 September 2020 (02.09.2020) | 15 September 2020 (15.09.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/024180

| Patent Documents referred in the Report | Publication Date | Patent Family | Publication Date |
|---|---|---|---|
| WO 2015/186557 A1 | 10 Dec. 2015 | US 2017/0058173 A1<br>claims, paragraphs [0002]-[0011], [0013], [0082]-[0095], [0107]-[0108], [0143]-[0150], examples 71-84, 99-140<br>EP 3153559 A1<br>CN 106414654 A | |
| WO 2015/186558 A1 | 10 Dec. 2015 | US 2017/0058171 A1<br>claims, paragraphs [0015], [0055]-[0057], examples 1-9, 20-28<br>EP 3153560 A<br>CN 106414655 A | |
| WO 2019/021726 A1 | 31 Jan. 2019 | (Family: none) | |

Form PCT/ISA/210 (patent family annex) (January 2015)

**EP 3 988 868 A1**

**REFERENCES CITED IN THE DESCRIPTION**

**Patent documents cited in the description**

- JP 2012526182 A
- JP 2013529703 A
- JP 2015511262 A
- JP 2016156001 A
- WO 2015141678 A